# EUROPEAN PATENT SPECIFICATION

(11) **EP 4 063 437 B1**
(45) Date of publication and mention of the grant of the patent: **09.07.2025**
(21) Application number: 20891130.5
(22) Date of filing: 02.11.2020
(51) Int. Cl.: C08J 5/18, C08G 71/04, C08L 3/02, C08L 75/04, C09D 103/02, C09D 175/04, B32B 27/18, B32B 27/40, C08J 7/048

(54) **GAS BARRIER FILM AND COMPOSITE RESIN COMPOSITION**
GASSPERRFILM UND VERBUNDHARZZUSAMMENSETZUNG
FILM FORMANT BARRIÈRE AUX GAZ ET COMPOSITION DE RÉSINE COMPOSITE

(30) Priority: 20.11.2019 JP 2019209975; 20.11.2019 JP 2019209976
(43) Date of publication of application: 28.09.2022
(73) Proprietor: DAINICHISEIKA COLOR & CHEMICALS MFG. CO., LTD., Chuo-ku Tokyo 103-8383 (JP)
(72) Inventor: TANIGAWA, Masashi, Tokyo 103-8383 (JP); KIMURA, Kazuya, Tokyo 103-8383 (JP); TAKAHASHI, Kenichi, Tokyo 103-8383 (JP)
(74) Representative: Wächtershäuser & Hartz Patentanwaltspartnerschaft mbB
(86) International application number: PCT/JP2020/041110
(87) International publication number: WO 2021/100453

(56) References cited:
- WO-A1-2008/026672
- WO-A1-2018/084102
- JP-A- 2001 187 857
- JP-A- 2003 053 909
- JP-A- 2003 292 713
- JP-A- 2006 198 842
- JP-A- 2016 194 029
- JP-A- 2016 204 592
- JP-A- 2019 127 548
- JP-A- 2019 127 574
- JP-A- 2020 122 056
- JP-A- H0 592 507
- JP-A- H0 841 218
- JP-A- H07 266 441
- JP-A- H10 237 180
- JP-A- S60 188 402
- US-A1- 2013 323 491
- US-A1- 2019 338 160

## Description

### Technical Field

The present invention relates to a gas barrier film and a composite resin composition.

### Background Art

Films having gas barrier ability (hereinafter, referred to as "gas barrier films") are mainly used for the purpose of protecting contents and are widely used in industrial material fields with a focus on the use as packaging materials for food products, pharmaceuticals, and the like. As a material for forming a gas barrier layer, a resin for a gas barrier film, such that a formed coat exhibits gas barrier ability, is used. Examples of such a resin include an ethylene-vinyl alcohol copolymer resin (hereinafter, abbreviated as EVOH) and a vinylidene chloride resin (hereinafter, abbreviated as PVDC). These resins having gas barrier ability can be used alone. Generally, as described below, a multilayer film is formed using another resin material, and the resin for a gas barrier film is used as a material for forming a gas barrier layer in the multilayer film.

For example, EVOH is used for a composite film by performing co-extrusion shaping or the like together with a resin such as polypropylene (hereinafter, abbreviated as PP), but EVOH is inferior in solubility into organic solvents and therefore is unsuitable for preparing a film or a coating film by a coating method. On the other hand, PVDC can be used for shaping by a coating method and can be applied on various substrates, and therefore is used as a coat film for food packaging and other purposes. However, PVDC has a high chlorine content ratio, and therefore it has been pointed out that dioxin is generated when PVDC is discarded (incinerated).

On the other hand, studies on reducing the use of petroleum-derived materials and using biomass-derived materials (in the present specification, resources are sometimes simply described as "biomass") as raw materials for polymers have progressed recently as a countermeasure for global warming issues. For example, with regard to polyethylene terephthalate (PET) which is used for packaging materials, a production method using biomass has almost been established, and further, with regard to polyethylene (PE) and polypropylene (PP), studies on using biomass have also been conducted. However, with regard to the above-described resins such as EVOH and PVDC which are widely used as a material for forming a gas barrier layer, it is hard to replace the resins with biomass-derived components because of the chemical structures thereof, and therefore current circumstances are that studies have not progressed.

In such circumstances, gas barrier coating agents of polysaccharides, representative examples of which include a water-soluble starch and a water-soluble cellulose derivative, have also been developed. It can be said that these coating agents are naturally derived coating agents and therefore are superior from both of the environmental viewpoint and the safety viewpoint. However, the coating materials of water-soluble polysaccharides cannot endure in practical use because a coating film having sufficient water resistance is not obtained.

On the other hand, as a novel environmentally compatible gas barrier material, which has a chemical structure totally different from those of EVOH and PVDC described above, Patent Literature 1 has proposed using a polyhydroxyurethane resin as a material for forming a gas barrier layer. The polyhydroxyurethane resin described in Patent Literature 1 is a resin that can be compatible with environmental issues in that it can be formed so as to have an -O-CO- bond derived from carbon dioxide in the chemical structure of the resin. Further, this resin has a characteristic in that it has a chemical structure having a hydroxy group in a site close to a urethane bond, so that gas barrier ability which has not been exhibited by conventional polyurethane resins can be exhibited due to this chemical structure site having a hydroxy group. Patent Literature 2 relates to a coating composition for forming a gas barrier layer, a gas barrier film and a production method of a gas barrier film. The film is composed of a polyhydroxyurethane resin.

### Citation List

### Patent Literature

Patent Literature 1: Japanese Patent Laid-Open No. 2012-172144 Patent Literature 2: US 2013/323491 A1

### Summary of Invention

### Technical Problem

The present invention intends to provide a gas barrier film in which water resistance is unlikely to be impaired while being an environmentally compatible material using biomass. Further, the present invention intends to provide a resin composition with which such a gas barrier film can be produced.

### Solution to Problem

That is, the present invention provides a gas barrier film made of a composite resin, wherein the composite resin contains: a polyhydroxyurethane resin (A) containing a repeating unit represented by the following formula (1.1), the repeating unit having, as a basic structure, a structural unit formed by polymerizing a compound (a1) having at least two five-membered cyclic carbonate structures and a compound (a2) having at least two amino groups; a starch-based compound (B); and a metal chelate compound (C) crosslinking the polyhydroxyurethane resin (A) and the starch-based compound (B), and has a content of the starch-based compound (B), based on 100 parts by mass of the polyhydroxyurethane resin (A), of 10 to 300 parts by mass.

Further, the present invention provides a composite resin composition for forming a gas barrier film, wherein the composite resin composition contains: a polyhydroxyurethane resin (A) containing a repeating unit represented by the following formula (1.1), the repeating unit having, as a basic structure, a structural unit formed by polymerizing a compound (a1) having at least two five-membered cyclic carbonate structures and a compound (a2) having at least two amino groups; a starch-based compound (B); and a metal chelate compound (C) capable of crosslinking the polyhydroxyurethane resin (A) and the starch-based compound (B), and has a content of the starch-based compound (B), based on 100 parts by mass of the polyhydroxyurethane resin (A), of 10 to 300 parts by mass. 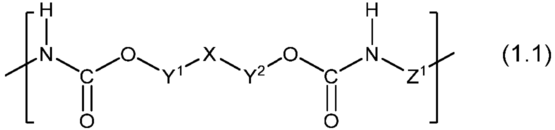 wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z¹ represents a divalent organic group represented by the following formula (6.1). 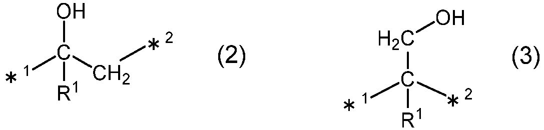 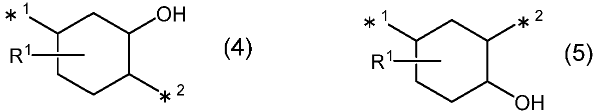 wherein each R¹ independently represents a hydrogen atom or a methyl group, *¹ represents a chemical bond with X in the formula (1.1), or when X is a direct bond, *¹ represents a chemical bond with the other Y, and *² represents a chemical bond with ○ in the formula (1.1). 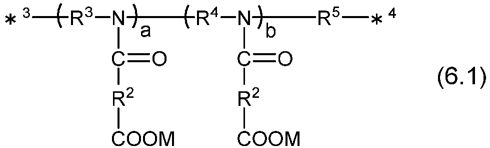 wherein R² represents a divalent hydrocarbon group optionally containing an oxygen atom and a nitrogen atom in a structure thereof; R³, R⁴, and R⁵ each independently represent a C1-10 alkylene group optionally containing an ether bond in a structure thereof; each M independently represents a hydrogen atom or a counter ion that forms a salt structure; a represents an integer of 0 to 3, and b represents an integer of 1 to 5; and *³ represents a chemical bond with N in Z¹ in the formula (1.1), and *⁴ represents the other chemical bond in Z¹.

Further, the present invention provides a gas barrier film made of a composite resin, wherein the composite resin contains: a polyhydroxyurethane resin (A) containing a structural unit represented by the following formula (1.2), the structural unit having, as a basic structure, a structural unit formed by polymerizing a compound (a1) having at least two five-membered cyclic carbonate structures and a compound (a2) having at least two amino groups; a starch-based compound (B); and a metal chelate compound (C) crosslinking the polyhydroxyurethane resin (A) and the starch-based compound (B), and has a content of the starch-based compound (B), based on 100 parts by mass of the polyhydroxyurethane resin (A), of 10 to 300 parts by mass.

Further, the present invention provides a composite resin composition for forming a gas barrier film, wherein the composite resin composition contains: a polyhydroxyurethane resin (A) containing a structural unit represented by the following formula (1.2), the structural unit having, as a basic structure, a structural unit formed by polymerizing a compound (a1) having at least two five-membered cyclic carbonate structures and a compound (a2) having at least two amino groups; a starch-based compound (B); and a metal chelate compound (C) capable of crosslinking the polyhydroxyurethane resin (A) and the starch-based compound (B), and has a content of the starch-based compound (B), based on 100 parts by mass of the polyhydroxyurethane resin (A), of 10 to 300 parts by mass. 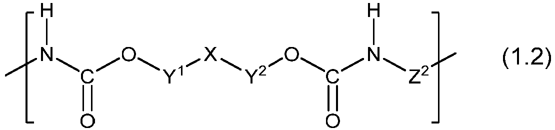 wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z² represents a divalent organic group represented by the following formula (6.2) containing a structure derived from the compound (a2). 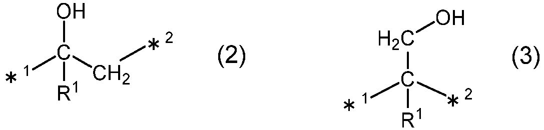 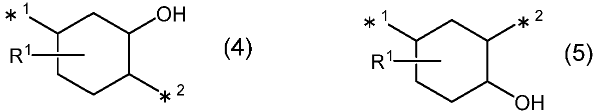 wherein each R¹ independently represents a hydrogen atom or a methyl group, *¹ represents a chemical bond with X in the formula (1.2), or when X is a direct bond, *¹ represents a chemical bond with the other Y, and *² represents a chemical bond with ○ in the formula (1.2). 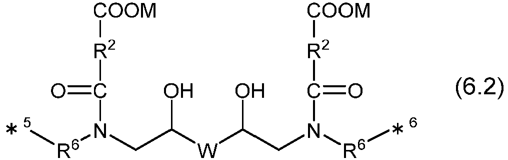 wherein R² represents a divalent hydrocarbon group optionally containing an oxygen atom and a nitrogen atom in a structure thereof; each R⁶ independently represents a divalent, C1-15 aliphatic hydrocarbon group, C4-15 alicyclic hydrocarbon group, or C6-15 aromatic hydrocarbon group, and in a structure of each of these groups, an ether bond, a sulfonyl bond, a hydroxy group, and a halogen atom are optionally contained; W represents a divalent, C1-30 aliphatic hydrocarbon group, C4-40 alicyclic hydrocarbon group, or C6-40 aromatic hydrocarbon group, and in a structure of each of these groups, an ether bond, an amino bond, a sulfonyl bond, an ester bond, a hydroxy group, and a halogen atom, and a polyalkylene glycol chain having a C2-6 alkylene group and 1 to 30 repeating units are optionally contained; each M independently represents a hydrogen atom or a counter ion that forms a salt structure; and *⁵ represents a chemical bond with N in Z² in the formula (1.2), and *⁶ represents the other chemical bond in Z².

### Advantageous Effects of Invention

According to the present invention, a gas barrier film in which water resistance is unlikely to be impaired while being an environmentally compatible material using biomass can be provided. Further, according to the present invention, a composite resin composition with which such a gas barrier film can be produced can be provided.

### Description of Embodiments

Hereinafter, embodiments of the present invention will be described, but the present invention is not limited to the following embodiments.

### <Gas Barrier Film and Composite Resin Composition>

The present inventors have conducted diligent studies for the purpose of providing an environmentally compatible gas barrier film having water resistance, wherein the biomass degree is easily enhanced. As a result, the present inventors have found that by using a composite resin composition containing 100 parts by mass of a particular polyhydroxyurethane resin (A), 10 to 300 parts by mass of a starch-based compound (B) which is a plant-derived material, and a metal chelate compound (C), the above-described objects can be achieved, and have completed the present invention.

As will be described later, an environmentally compatible polyhydroxyurethane resin for which carbon dioxide can be used as one of the raw materials can be used as the polyhydroxyurethane resin (A). Further, the starch-based compound (B) that is used together with this is a material derived from starch of plants and has biodegradability. Therefore, with regard to the composite resin composition, the non-petroleum resource ratio of the raw materials is improved, and the composite resin composition contains 10 to 300 parts by mass of the starch-based compound (B) based on 100 parts by mass of the polyhydroxyurethane resin (A), and therefore an environmentally compatible film which can achieve a high biomass degree can be provided.

Further, the environmentally compatible film formed with the composite resin composition, which is a polyhydroxyurethane resin-starch hybrid composition, has favorable gas barrier ability and has water resistance. The present inventors consider the reason as follows. First of all, the polyhydroxyurethane resin (A) has a lot of hydroxy groups in the structure thereof and therefore exhibits gas barrier ability due to the hydrogen bonds of the hydroxy groups. Further, the polyhydroxyurethane resin (A) and the starch-based compound (B) are crosslinked by the metal chelate compound (C). Specifically, it is considered that hydroxy groups in the polyhydroxyurethane resin (A) and hydroxy groups present in the structure of the starch-based compound (B) are crosslinked by the metal chelate compound (C) and some parts of the hydroxy groups form covalent bonds or form hydrogen bonds. Thereby, a film having a composition in which a composite of the polyhydroxyurethane resin (A) and the starch-based compound (B) have been made in a favorable state with the metal chelate compound (C) can be formed. Therefore, it is considered that the film formed with the composite resin composition containing the above-described (A), (B), and (C) has favorable gas barrier ability and has water resistance at a level comparable to a film formed without using the starch-based compound (B) because the characteristics, such as water solubility and swelling by absorbing moisture, in the starch-based compound (B) are reduced.

As described above, the gas barrier film of one embodiment of the present invention is made of a composite resin. This composite resin contains: a particular polyhydroxyurethane resin (A); the starch-based compound (B); and the metal chelate compound (C) crosslinking the polyhydroxyurethane resin (A) and the starch-based compound (B). The composite resin has a content of the starch-based compound (B), based on 100 parts by mass of the polyhydroxyurethane resin (A), of 10 to 300 parts by mass. The gas barrier film made of this composite resin can easily be formed from the composite resin composition described below.

That is, the composite resin composition for forming a gas barrier film of one embodiment of the present invention contains: a particular polyhydroxyurethane resin (A); the starch-based compound (B); and the metal chelate compound (C) capable of crosslinking the polyhydroxyurethane resin (A) and the starch-based compound (B). In this composite resin composition, the content of the starch-based compound (B), based on 100 parts by mass of the polyhydroxyurethane resin (A), is 10 to 300 parts by mass.

Next, each of the polyhydroxyurethane resin (A), the starch-based compound (B), and the metal chelate compound (C) will be described, and preferred constitution of the gas barrier film and the composite resin composition will be described.

### [Polyhydroxyurethane Resin (A)]

As a particular polyhydroxyurethane resin (A) described above, at least one of the first aspect and the second aspect, which are described below, can be used. The first aspect is a polyhydroxyurethane resin (A) containing a repeating unit represented by formula (1.1), which will be described later (hereinafter, this is sometimes described as "polyhydroxyurethane resin (1A)"). The second aspect is a polyhydroxyurethane resin (A) containing a structural unit represented by formula (1.2), which will be described later (hereinafter, this is sometimes described as "polyhydroxyurethane resin (2A)"). The gas barrier film and the composite resin composition can contain any one or both of the polyhydroxyurethane resin (1A) and the polyhydroxyurethane resin (2A). In the present specification, description items which are common to the polyhydroxyurethane resin (1A) and the polyhydroxyurethane resin (2A) are sometimes written as the "polyhydroxyurethane resin (A)" without distinguishing the polyhydroxyurethane resin (1A) and the polyhydroxyurethane resin (2A).

### · Polyhydroxyurethane Resin (1A)

The polyhydroxyurethane resin (1A) contains a repeating unit represented by the following formula (1.1). This repeating unit has, as a basic structure, a structural unit formed by polymerizing a compound (a1) having at least two five-membered cyclic carbonate structures (hereinafter, sometimes simply described as "compound (a1)") and a compound (a2) having at least two amino groups (hereinafter, sometimes simply described as "compound (a2)"). Herein, "the repeating unit represented by formula (1.1) has, as a basic structure, a structural unit formed by polymerizing the compound (a1) and the compound (a2)" means that the repeating unit represented by formula (1.1) is formed by introducing another chemical structure in the basic structure. In the polyhydroxyurethane resin (1A), the compound (a2) preferably contains at least a compound (a2-1), which will be described later.

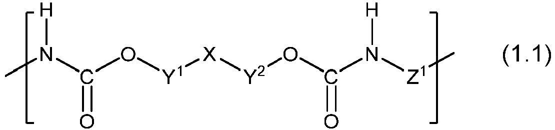

In formula (1.1), X represents a divalent organic group derived from the compound (a1) or a direct bond. Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (1A). Z¹ represents a divalent organic group represented by the following formula (6.1).

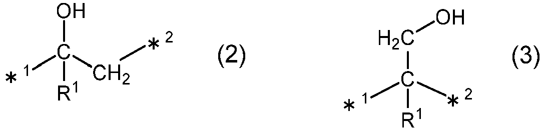

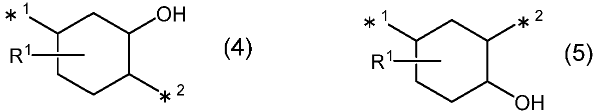

In formulas (2) to (5), each R¹ independently represents a hydrogen atom or a methyl group, *¹ represents a chemical bond with X in formula (1.1), or when X is a direct bond, *¹ represents a chemical bond with the other Y, and *² represents a chemical bond with ○ in formula (1.1).

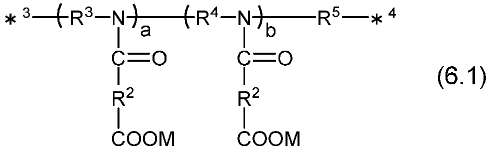

In formula (6.1), R² represents a divalent hydrocarbon group optionally containing an oxygen atom and a nitrogen atom in a structure thereof. R³, R⁴, and R⁵ each independently represent a C1-10 alkylene group optionally containing an ether bond in a structure thereof. Each M independently represents a hydrogen atom or a counter ion that forms a salt structure. a represents an integer of 0 to 3, and b represents an integer of 1 to 5. *³ represents a chemical bond with N in Z¹ in formula (1.1), and *⁴ represents the other chemical bond in Z¹.

X in formula (1.1) represents a direct bond or a divalent organic group derived from the compound (a1). The divalent organic group represented by X and derived from the compound (a1) can be any of various groups according to the compound (a1). Examples of a suitable divalent organic group include a C1-30 aliphatic hydrocarbon group, a C4-40 alicyclic hydrocarbon group, and a C6-40 aromatic hydrocarbon group, and these hydrocarbon groups optionally contain an ether bond, an amino bond, a sulfonyl bond, an ester bond, a hydroxy group, and a halogen atom, and a polyalkylene glycol chain having a C2-6 alkylene group and 1 to 30 repeating units.

In the present specification, a group "derived from" a compound refers to a group which the compound had or a group derived from the group which the compound had. Further, the "organic group" refers to a group containing at least a carbon atom, the group being a hydrocarbon group optionally containing an atom other than the carbon atom and a hydrogen atom (such as, for example, an oxygen atom, a nitrogen atom, a sulfur atom, and a halogen atom).

Each of Y¹ and Y² in formula (1.1) also represents a group derived from the compound (a1) and represents a divalent organic group containing a hydroxy group, as shown in formulas (2) to (5). The polyhydroxyurethane resin (1A) contains hydroxy groups in the repeating unit represented by formula (1.1), and therefore a gas barrier function can be brought about in a film made of a composite resin composition containing the polyhydroxyurethane resin (1A).

Examples of a suitable divalent hydrocarbon group represented by R² in formula (6.1) and optionally containing an oxygen atom and a nitrogen atom include an aliphatic hydrocarbon group, an alicyclic hydrocarbon group, and an aromatic hydrocarbon group, and these hydrocarbon groups optionally contain an oxygen atom and a nitrogen atom. Among these, R² more preferably represents a C1-10 hydrocarbon group or C6-10 aromatic hydrocarbon group optionally containing an oxygen atom and a nitrogen atom.

The C1-10 alkylene group represented by R³, R⁴, and R⁵ in formula (6.1) and optionally containing an ether bond may be ether a straight-chain alkylene group or a branched alkylene group. The alkylene group is preferably a C1-6 straight-chain alkylene group, more preferably a C1-4 straight-chain alkylene group, and still more preferably an ethylene group, a n-propylene group, or a n-butylene group.

Examples of a suitable counter ion that is represented by M in formula (6.1) and that forms a salt structure include alkali metals, such as sodium and potassium; ammonium; and organic ammoniums, such as methylammonium, dimethylammonium, trimethylammonium, tetramethylammonium, ethylammonium, triethylammonium, n-propylammonium, n-butylammonium, monoethanolammonium, and triethanolammonium.

The polyhydroxyurethane resin (1A) contains a divalent organic group represented by formula (6.1) as Z¹ in the repeating unit represented by formula (1.1) and therefore has a chemical structure containing carboxy groups, or anions thereof or salts thereof (hereinafter, these are sometimes described as "carboxy groups" all together). Z¹ (the divalent organic group represented by formula (6.1)) is preferably a group obtained by introducing carboxy groups in a divalent organic group derived from the compound (a2) (more preferably the compound (a2-1), which will be described later). The polyhydroxyurethane resin (1A) contains carboxy groups, which are anionic groups, as hydrophilic groups in the repeating unit represented by formula (1.1) and therefore can be self-emulsified in an aqueous medium, such as water. Therefore, the above-described composite resin composition can suitably be used as the form of a water dispersion (emulsion).

### . Polyhydroxyurethane Resin (2A)

Next, the polyhydroxyurethane resin (2A) is described. The polyhydroxyurethane resin (2A) contains a structural unit represented by the following formula (1.2). This structural unit has, as a basic structure, a structural unit formed by polymerizing a compound (a1) having at least two five-membered cyclic carbonate structures (hereinafter, sometimes simply described as "compound (a1)'') and a compound (a2) having at least two amino groups. Herein, "the structural unit represented by formula (1.2) has, as a basic structure, a structural unit formed by polymerizing the compound (a1) and the compound (a2)" means that the repeating unit represented by formula (1.2) is formed by introducing another chemical structure in the basic structure. In the polyhydroxyurethane resin (2A), the compound (a2) preferably contains at least a compound (a2-2), which will be described later.

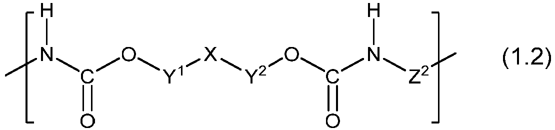

In formula (1.2), X represents a divalent organic group derived from the compound (a1) or a direct bond. Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (2A). Z² represents a divalent organic group represented by the following formula (6.2) containing a structure derived from the compound (a2).

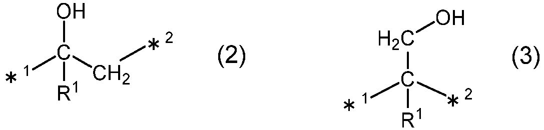

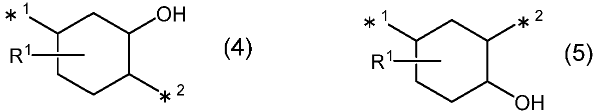

In formulas (2) to (5), each R¹ independently represents a hydrogen atom or a methyl group, *¹ represents a chemical bond with X in the formula (1.2), or when X is a direct bond, *¹ represents a chemical bond with the other Y, and *² represents a chemical bond with O in the formula (1.2).

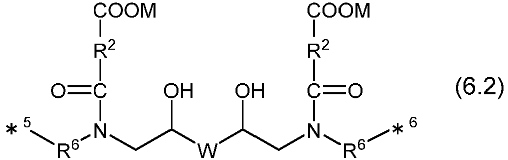

In formula (6.2), R² represents a divalent hydrocarbon group optionally containing an oxygen atom and a nitrogen atom in a structure thereof. Each R⁶ independently represents a divalent, C1-15 aliphatic hydrocarbon group, C4-15 alicyclic hydrocarbon group, or C6-15 aromatic hydrocarbon group, and in a structure of each of these groups, an ether bond, a sulfonyl bond, a hydroxy group, and a halogen atom are optionally contained. W represents a divalent, C1-30 aliphatic hydrocarbon group, C4-40 alicyclic hydrocarbon group, or C6-40 aromatic hydrocarbon group, and in a structure of each of these groups, an ether bond, an amino bond, a sulfonyl bond, an ester bond, a hydroxy group, and a halogen atom, and a polyalkylene glycol chain having a C2-6 alkylene group and 1 to 30 repeating units are optionally contained. Each M independently represents a hydrogen atom or a counter ion that forms a salt structure. *⁵ represents a chemical bond with N in Z² in formula (1.2), and *⁶ represents the other chemical bond in Z².

X in formula (1.2) represents a direct bond or a divalent organic group derived from the compound (a1). The divalent organic group represented by X and derived from the compound (a1) can be any of various groups according to the compound (a1). Examples of a suitable divalent organic group include a C1-30 aliphatic hydrocarbon group, a C4-40 alicyclic hydrocarbon group, and a C6-40 aromatic hydrocarbon group, and these hydrocarbon groups optionally contain an ether bond, an amino bond, a sulfonyl bond, an ester bond, a hydroxy group, and a halogen atom, and a polyalkylene glycol chain having a C2-6 alkylene group and 1 to 30 repeating units.

Each of Y¹ and Y² in formula (1.2) also represents a group derived from the compound (a1) and represents a divalent organic group containing a hydroxy group, as shown in formulas (2) to (5). The polyhydroxyurethane resin (2A) contains hydroxy groups in the structural unit represented by formula (1.2), and therefore a gas barrier function can be brought about in a film made of a composite resin composition containing the polyhydroxyurethane resin (2A).

Examples of a suitable divalent hydrocarbon group represented by R² in formula (6.2) and optionally containing an oxygen atom and a nitrogen atom include an aliphatic hydrocarbon group, an alicyclic hydrocarbon group, and an aromatic hydrocarbon group, and these hydrocarbon groups optionally contain an oxygen atom and a nitrogen atom. Among these, R² more preferably represents a C1-10 hydrocarbon group or C6-10 aromatic hydrocarbon group optionally containing an oxygen atom and a nitrogen atom.

Among the divalent groups represented by R⁶ in formula (6.2), the divalent group is preferably a divalent C1-15 (more preferably C2-12) aliphatic hydrocarbon group optionally containing an ether bond, a sulfonyl bond, a hydroxy group, and a halogen atom. Among others, the divalent group is more preferably a C1-15 straight-chain alkylene group, and still more preferably a C2-12 straight-chain alkylene group, such as an ethylene group, a trimethylene group, a tetramethylene group, a hexamethylene group, an octamethylene group, or a dodecamethylene group.

Examples of a suitable counter ion that is represented by M in formula (6.2) and that forms a salt structure include alkali metals, such as sodium and potassium; ammonium; and organic ammoniums, such as methylammonium, dimethylammonium, trimethylammonium, tetramethylammonium, ethylammonium, triethylammonium, n-propylammonium, n-butylammonium, monoethanolammonium, and triethanolammonium.

The polyhydroxyurethane resin (2A) contains a divalent organic group represented by formula (6.2) as Z² in the structural unit represented by formula (1.2) and therefore has a chemical structure containing carboxy groups, or anions thereof or salts thereof (hereinafter, these are sometimes described as "carboxy groups" all together). Z² (the divalent organic group represented by formula (6.2)) is preferably a group obtained by introducing carboxy groups in a divalent organic group derived from the compound (a2) (more preferably the compound (a2-2), which will be described later). The polyhydroxyurethane resin (2A) contains carboxy groups, which are anionic groups, as hydrophilic groups in the structural unit represented by formula (1.2) and therefore can be self-emulsified in an aqueous medium, such as water. Therefore, the above-described composite resin composition can suitably be used as the form of a water dispersion (emulsion).

(Basic Structure in Polyhydroxyurethane Resin (A)) First of all, as the description common to the polyhydroxyurethane resin (1A) and the polyhydroxyurethane resin (2A), the basic structure in the polyhydroxyurethane resin (A) is described from the viewpoint of the method for producing the polyhydroxyurethane resin (A). The basic structure in the polyhydroxyurethane resin (A) is obtained by polyaddition reaction between the compound (a1) having at least two five-membered cyclic carbonate structures in one molecule and the compound (a2) having at least two amino groups in one molecule, as described above.

Firstly, in a reaction between a compound having a five-membered cyclic carbonate (hereinafter, sometimes simply described as "cyclic carbonate") structure and an amine, there are two types of cleavage of the cyclic carbonate, as shown in a model reaction represented by the following reaction equation (R-i). Therefore, products of two types of structures are obtained.

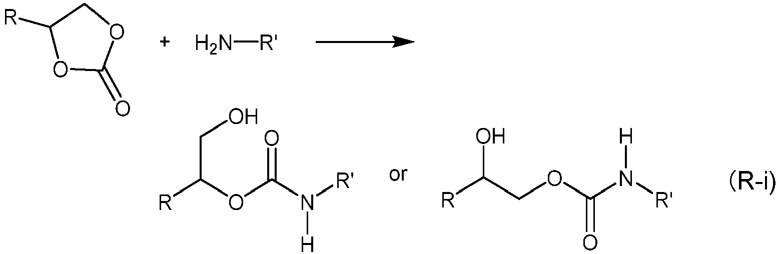

Accordingly, when, for example, bifunctional compounds are reacted with each other, that is, when a compound having two cyclic carbonate structures and a compound having two amino groups are reacted, products of four types of structures are obtained.

For example, with respect to a polymer obtained by polyaddition reaction between a compound, as the compound (a1), having two cyclic carbonate structures, the compound represented by the following formula (a1-1), and a compound, as the compound (a2), represented by formula (a2), four types of chemical structures represented by the following formulas (I) to (IV) are generated, and it is considered that these are present at random positions. Note that a resin containing the repeating units represented by the following formulas (I) to (IV) obtained in the example of this reaction model has a structure corresponding to a divalent organic group represented by formula (2) or (3).

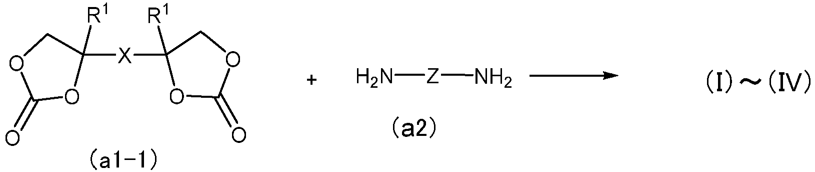

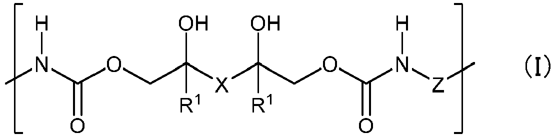

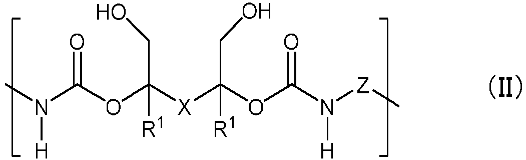

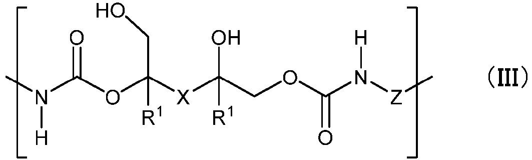

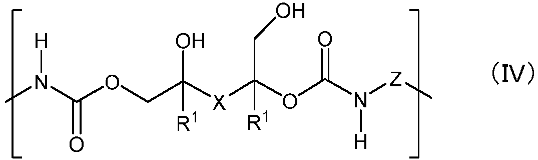

X in formula (a1-1) and formulas (I) to (IV) represents a direct bond or a divalent organic group. Each R¹ in formula (a1-1) and formulas (I) to (IV) independently represents a hydrogen atom or a methyl group. Z in formula (a2) and formulas (I) to (IV) represents a divalent organic group. Examples of the divalent organic groups represented by X and Z include a divalent hydrocarbon group (aliphatic hydrocarbon group, alicyclic hydrocarbon group, or aromatic hydrocarbon group) optionally containing a hetero atom, such as an oxygen atom, a nitrogen atom, a sulfur atom, and a halogen atom. Z is preferably a divalent organic group containing at least a nitrogen atom, and more preferably a divalent organic group containing at least one secondary amino group (-NH-; which may be referred to as an imino group) in the molecule.

Further, for example, with respect to a polymer obtained by polyaddition reaction between a compound, as the compound (a1), having two cyclic carbonate structures, the compound represented by the following formula (a1-2), and a compound, as the compound (a2), represented by formula (a2), four types of chemical structures represented by the following formulas (V) to (VIII) are generated, and it is considered that these are present at random positions. Note that a resin containing the repeating units represented by the following formulas (V) to (VIII) obtained in the example of this reaction model has a structure corresponding to a divalent organic group represented by formula (4) or (5).

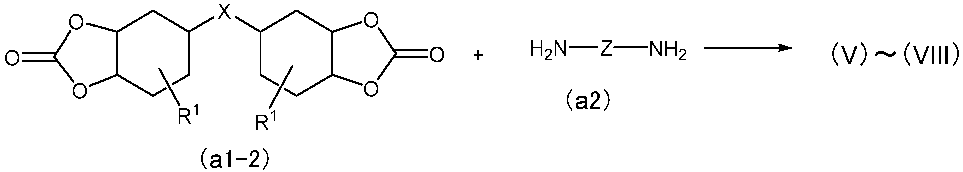

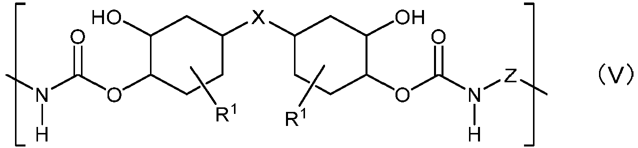

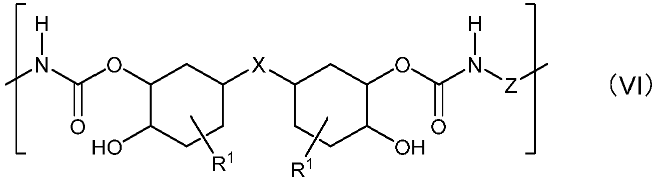

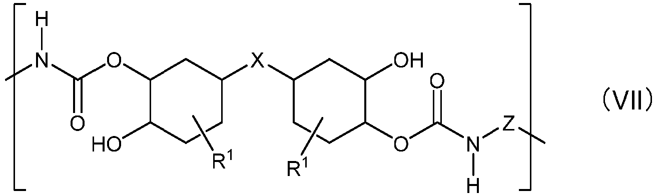

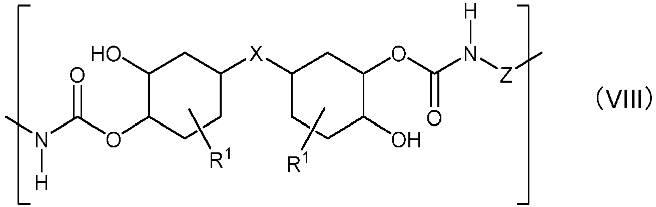

X in formula (a1-2) and formulas (V) to (VIII) represents a direct bond or a divalent organic group. Each R¹ in formula (a1-2) and formulas (V) to (VIII) independently represents a hydrogen atom or a methyl group. Z in formulas (V) to (VIII) represents a divalent organic group. Examples of the divalent organic groups represented by X and Z include a divalent hydrocarbon group (aliphatic hydrocarbon group, alicyclic hydrocarbon group, or aromatic hydrocarbon group) optionally containing a hetero atom, such as an oxygen atom, a nitrogen atom, a sulfur atom, and a halogen atom. Z is preferably a divalent organic group containing at least a nitrogen atom, and more preferably a divalent organic group containing at least one secondary amino group (-NH-; which may be referred to as an imino group) in the molecule.

### (Compound (a1) Having at Least Two Five-membered Cyclic Carbonate Structures)

The compound (a1) having at least two five-membered cyclic carbonate structures in one molecule, which is one of the raw material components for the polyhydroxyurethane resin (A), can be obtained by the reaction between an epoxy compound and carbon dioxide, as shown in the model reaction represented by the following reaction equation (R-ii). For example, an epoxy compound (compound having two or more epoxy groups), which is a raw material, is reacted in the presence of a catalyst at a temperature of 0 to 160°C for 4 to 24 hours in an atmosphere of carbon dioxide pressurized at about atmospheric pressure to about 1 MPa. As a result, a compound (compound having two or more five-membered cyclic carbonate structures) in which carbon dioxide is fixed at an ester site can be obtained. Note that X in reaction equation (R-ii) represents a divalent organic group, and examples thereof include a divalent hydrocarbon group (aliphatic hydrocarbon group, alicyclic hydrocarbon group, or aromatic hydrocarbon group) optionally containing a hetero atom, such as an oxygen atom, a nitrogen atom, a sulfur atom, and a halogen atom.

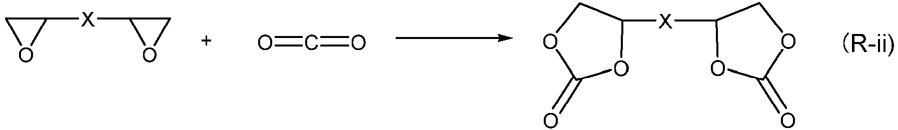

The resin obtained by using the compound (a1) synthesized using carbon dioxide as a raw material has an - O-CO- bond in which carbon dioxide is fixed in the structure thereof. The content of the -O-CO- bond derived from carbon dioxide (amount of carbon dioxide fixed) in the polyhydroxy urethane resin (A) is preferably as high as possible from the standpoint of effective utilization of carbon dioxide. For example, by using the compound (a1) synthesized using carbon dioxide as a raw material, carbon dioxide can be contained in a range of 1 to 30% by mass (more preferably 1 to 20% by mass) in the structure of the polyhydroxyurethane resin (A). That is, the polyhydroxyurethane resin (A) is preferably a resin in which the -O-CO- bond derived from carbon dioxide, which is a raw material, accounts for 1 to 30% by mass (more preferably 1 to 20% by mass) of the mass of the polyhydroxyurethane resin (A).

As the catalyst which is used for the reaction between the epoxy compound and carbon dioxide, one of, or two or more of known catalysts (such as, for example, halogenated salts and quaternary ammonium salts) which can be used for the synthesis of the compound (a1) can be used. The use amount of the catalyst can also be determined appropriately from known ranges. Further, the reaction between the epoxy compound and carbon dioxide can also be performed in the presence of an organic solvent. As the organic solvent which is used when this reaction is performed, an organic solvent which dissolves the above-described catalyst can be used, and one of, or two or more of known organic solvents (such as, for example, amide-based solvents, alcohol-based solvents, and ether-based solvents) which can be used for the synthesis of the compound (a1) can be used.

The structure of the above-described compound (a1) is not particularly limited as long as the compound (a1) has two or more five-membered cyclic carbonate structures in one molecule. For example, the compound having a benzene skeleton, an aromatic polycyclic skeleton, a condensed polycyclic aromatic skeleton, or any of aliphatic or alicyclic compounds having the cyclic carbonate structures can also be used. Examples of the usable compounds are given below.

Examples of the compound (a1) having a benzene skeleton, an aromatic polycyclic skeleton, or a condensed polycyclic aromatic skeleton include compounds having a structure represented by any one of the structural formulas (a1.1) to (a1.6) shown below. Note that R in the following structural formulas (a1.3) and (a1.4) represents H or CH₃.

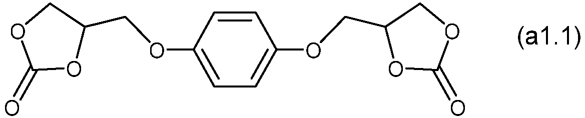

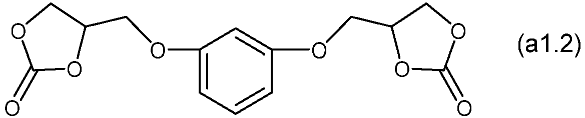

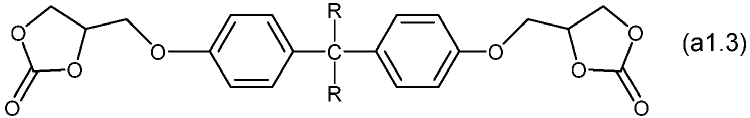

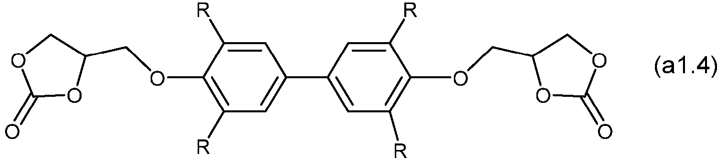

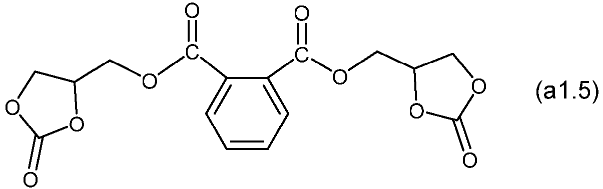

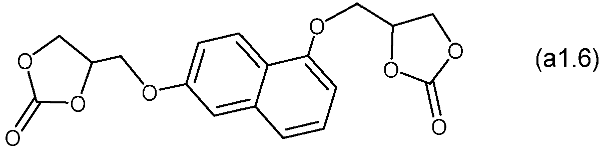

Examples of the compound (a1) having an aliphatic or alicyclic structure include compounds having a structure represented by any one of the structural formulas (a1.7) to (a1.14) shown below. Note that R in the following structural formulas (a1.7), (a1.10), and (a1, 11) represents H or CH₃.

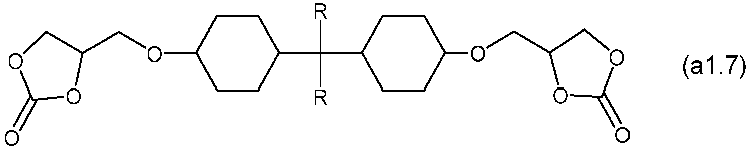

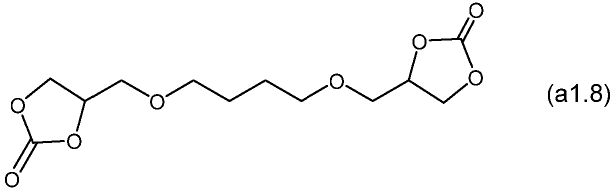

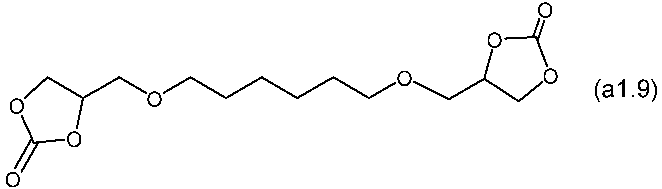

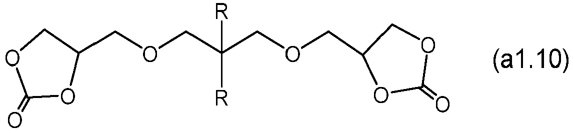

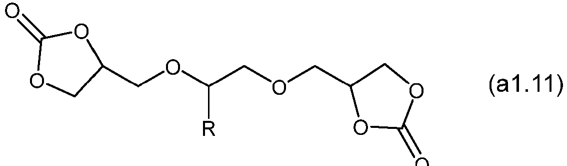

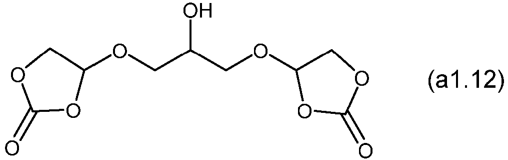

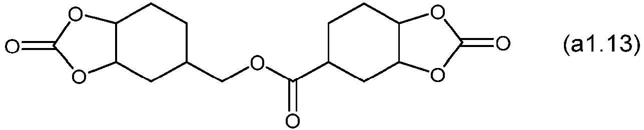

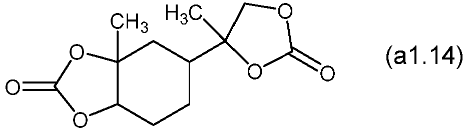

Among the above-described compounds (a1), the compound (a1) is more preferably a compound represented by the following formula (a1-3). This compound represented by formula (a1-3) is a compound such that in the above-described compound represented by formula (a1-1), X in formula (a1-1) represents a divalent organic group containing two ether bonds and R¹ in formula (a1-1) represents a hydrogen atom. R^{X} in the following formula (a1-3) represents a divalent organic group. Examples of the divalent organic group include a divalent hydrocarbon group (aliphatic hydrocarbon group, alicyclic hydrocarbon group, or aromatic hydrocarbon group) optionally containing a hetero atom, such as an oxygen atom, a nitrogen atom, a sulfur atom, and a halogen atom.

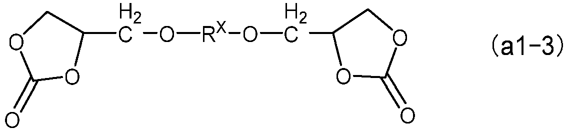

With respect to a polymer obtained by polyaddition reaction between a compound, as the compound (a1), represented by formula (a1-3), and the above-described compound, as the compound (a2), represented by formula (a2), four types of chemical structures represented by the following formulas (I-1) to (IV-1) are generated, and it is considered that these are present at random positions. R^{X} in the following formulas (I-1) to (IV-1) represents a divalent organic group derived from the compound represented by formula (a1-3).

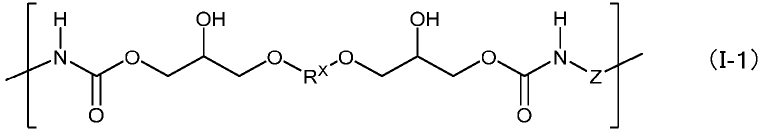

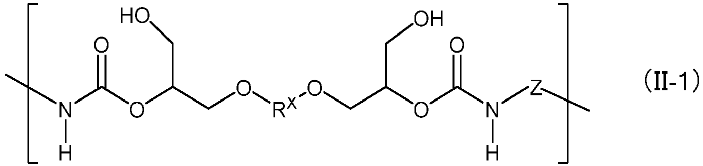

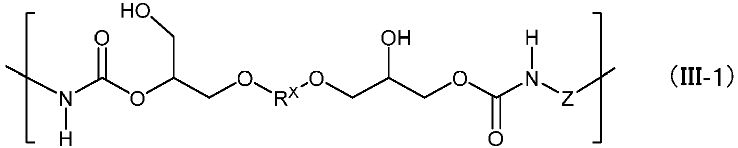

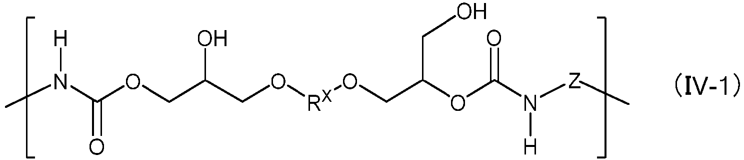

### (Compound (a2) Having at Least Two Amino Groups)

Next, description will be made on the compound (a2) having at least two amino groups in one molecule, which is one of the raw material components for the polyhydroxyurethane resin (A), for each of the first aspect and the second aspect separately.

### · Compound (a2) Suitable in First Aspect

As the compound (a2) which is used for obtaining the polyhydroxyurethane resin (1A) of the first aspect, a compound which gives a basic skeleton of Z¹ (that is, the divalent organic group represented by formula (6.1)) in the repeating unit represented by formula (1.1) in the polyhydroxyurethane resin (1A) is at least used. Such a compound (a2) is preferably a compound (in the present specification, sometimes simply described as "compound (a2-1)") having two amino groups (-NH₂) and at least one imino group (-NH-) in one molecule, as represented by the following formula (a2-1). In the following formula (a2-1), R³, R⁴, R⁵, a, and b are synonymous with those described above in formula (6.1), respectively.

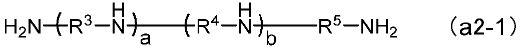

Examples of the compound represented by formula (a2-1) include diethylenetriamine, triethylenetetramine, imino bis propylamine, tetraethylenepentamine, N,N'-bis(3-aminopropyl)-1,3-propylenediamine and N,N'-bis(3-aminopropyl)-1,4-butylenediamine. One of, or two or more of these compounds can be used.

With respect to the imino group in the compound represented by formula (a2-1), the reaction with the above-described compound (a1) having at least two cyclic carbonate structures does not occur, and therefore a polyhydroxyurethane containing the imino group in the main chain can be synthesized. By using this polyhydroxyurethane containing the imino group as an intermediate product in the next reaction, which will be described later, the polyhydroxyurethane resin (1A) containing the structure represented by formula (6.1) and having carboxy groups can be obtained. For example, with respect to the condition in the reaction between the compound (a1), such as the above-described compound (a1-3) represented by formula (a1-3), and the compound represented by formula (a2-1), the two may be mixed and reacted at a temperature of 40 to 200°C for 4 to 24 hours.

The reaction between the compound (a1) and the compound represented by formula (a2-1) can also be performed without a solvent but is preferably performed in a hydrophilic solvent. Examples of a suitable hydrophilic solvent include tetrahydrofuran, dioxane, dimethylformamide, N-methyl pyrrolidone, dimethyl sulfoxide, methanol, ethanol, propanol, ethylene glycol, propylene glycol, ethylene glycol monomethyl ether, ethylene glycol dimethyl ether, propylene glycol methyl ether, diethylene glycol monomethyl ether, and diethylene glycol dimethyl ether. Among the solvents enumerated above, examples of a preferred solvent include tetrahydrofuran having a boiling point at which distillation by evaporation after phase inversion emulsification is easily performed.

The reaction between the compound (a1) and the compound represented by formula (a2-1) can also be performed in the presence of a catalyst in order to facilitate the reaction. Examples of a suitable catalyst include: triethylamine, tributylamine, diazabicycloundecene (DBU), and triethylenediamine (DABCO); basic catalysts, such as pyridine and hydroxy pyridine; and Luis acid catalysts, such as tetrabutyltin and dibutyltin dilaurate. The use amount of the catalyst is preferably 0.01 to 10 parts by mass per 100 parts by mass of the total amount of the compound (a1) and the compound represented by formula (a2-1).

### . Introduction of Carboxy Groups in Formula (6.1)

Next, a chemical structure having carboxy groups is introduced into the above-described polyhydroxyurethane (intermediate product) containing an imino group in the main chain. For example, the intermediate product and a cyclic acid anhydride are reacted, and thereby the polyhydroxyurethane resin (1A) having a chemical structure site containing carboxy groups and represented by formula (6.1) can be obtained by the reaction between the imino group in the intermediate product and the cyclic acid anhydride.

Examples of the cyclic acid anhydride which can be used for the above-described reaction include: aliphatic acid anhydrides, such as succinic anhydride, maleic anhydride, itaconic anhydride, caronic anhydride, citraconic anhydride, glutaric anhydride, diglycolic anhydride, and 1,2,3,4-butane tetracarboxylic dianhydride; aromatic acid anhydrides, such as phthalic anhydride, trimellitic anhydride, 1,8-naphthalic anhydride, and pyromellitic anhydride; alicyclic acid anhydrides, such as 1,1-cyclohexane diacetic anhydride, 1-cyclohexene-1,2-dicarboxylic anhydride, 1,1-cyclopentane diacetic anhydride, and 5-norbornene-2,3-dicarboxylic anhydride; and derivatives thereof. One of, or two or more of these cyclic acid anhydrides can be used. Among these, compounds having a low molecular weight exhibit emulsion stability in a small use amount, and therefore, for example, the cyclic acid anhydride is preferably succinic anhydride or maleic anhydride.

Introduced carboxy groups may be left as they are, but in obtaining a water dispersion of the polyhydroxyurethane resin (1A), some parts or all of (preferably all of) the carboxy groups are preferably neutralized to make the polyhydroxyurethane resin (1A) into the form of a neutralized salt in advance in order to facilitate ionization in water. Examples of the basic compound which is used for the neutralization include organic amines, such as ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, and 2-amino-2-methyl-1-propanol; alkali metals, such as lithium, potassium, and sodium; and inorganic bases, such as sodium hydroxide, potassium hydroxide, calcium hydroxide, and ammonia, and one of, or two or more of these basic compounds can be used. Among these basic compounds, the basic compound is preferably volatilizable at the time of forming a coating film (film) because the water resistance of the coating film (film) is improved, and therefore the basic compound is preferably triethylamine for example.

When the chemical structure having carboxy groups is introduced, thereby a water dispersion of the polyhydroxyurethane resin (1A) can also easily be obtained. In obtaining a solution of the polyhydroxyurethane resin (1A) by synthesizing the polyhydroxyurethane (1A), in which carboxy groups are introduced, in the above-described hydrophilic solvent, phase inversion is preferably performed by slowly adding water to the solution. Thereby, an oil-in-water type (O/W type) emulsion can be obtained. The use amount of water to be added in performing the phase inversion can appropriately be determined according to the type, resin concentration, viscosity, and the like of the solvent which is used in synthesizing the polyhydroxyurethane resin (1A), but is preferably about 50 to about 200 parts by mass per 100 parts by mass of the resin (solid content) in the resin solution. By volatilizing the solvent by heating the O/W type emulsion, which is obtained by performing phase inversion emulsification, under a reduced pressure condition, the water dispersion of the polyhydroxyurethane resin (1A) can be obtained. With respect to this water dispersion of the polyhydroxyurethane resin (1A), the median diameter (d₅₀) based on volume, measured using a dynamic light scattering particle size distribution analyzer, is preferably about 0.01 to about 100 µm.

As described above, the polyhydroxyurethane resin (1A) contains hydroxy groups, derived from the above-described structures represented by formulas (2) to (5), in the above-described repeating unit represented by formula (1.1) and therefore can bring about a gas barrier function to a film made of a composite resin containing the polyhydroxyurethane resin (1A), which is different from a polyurethane resin generally obtained by subjecting an isocyanate compound and a polyol compound to addition reaction. From the viewpoint of this gas barrier ability, the viewpoint of film suitability, and other viewpoints, the polyhydroxyurethane resin (1A) preferably has a hydroxyl value in a range of 150 to 300 mgKOH/g. The hydroxyl value (mgKOH/g) in the present specification is a value which is measured in accordance with the stipulation of JIS K1557-1.

Further, the polyhydroxyurethane resin (1A) contains carboxy groups in the above-described repeating units represented by formula (1.1), and therefore the above-described composite resin composition can suitably be used as the form of a water dispersion (emulsion). The amount of the carboxy groups in the polyhydroxyurethane resin (1A) gives an influence on the emulsion stability in the case of preparing the emulsion and the water resistance of the film formed with the composite resin composition. From the above-described viewpoints of the emulsion stability and the water resistance of the film, the amount of the carboxy groups in the polyhydroxyurethane resin (1A) is preferably set in such a way that the acid value of the polyhydroxyurethane resin (1A) falls within a range of 10 to 100 mgKOH/g. Further, the degree of stability of emulsified particles is also influenced by the molecular weight of the resin, and therefore the weight average molecular weight of the polyhydroxyurethane resin (1A) is preferably in a range of 10000 to 100000.

The acid value (mgKOH/g) in the present specification is a value which is measured in accordance with the stipulation of JIS K1577-5. Further, the weight average molecular weight in the present specification is a value which is measured as a value in terms of standard polystyrene by gel permeation chromatography (GPC) using N,N-dimethylformamide (DMF) as a mobile phase and using a GPC apparatus (trade name "GPC-8220," manufactured by Tosoh Corporation; columns Super AW2500 + AW3000 +AW4000 + AW5000) .

### . Compound (a2) Suitable in Second Aspect

As the compound (a2) which is used for obtaining the polyhydroxyurethane resin (2A) of the second aspect, a compound which gives a basic skeleton of Z² (the divalent organic group represented by formula (6.2)) in the structural unit represented by formula (1.2) in the polyhydroxyurethane resin (2A) is at least used. Such a compound (a2) is preferably a compound (a2-2) represented by the following formula (a2-2). In the following formula (a2-2), R⁶ and W are synonymous with the above-described R⁶ and W in formula (6.2), respectively.

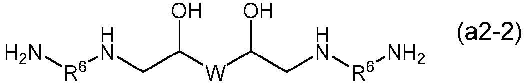

The compound (a2-2) represented by formula (a2-2) is obtained by performing a step (hereinafter, sometimes described as "first reaction step") of reacting a compound (a2-3) which can also be used as the compound (a2) and which has at least two amino groups in one molecule and a compound (a3) having at least two epoxy groups in one molecule.

From the viewpoint of easily obtaining the compound (a2-2), the first reaction step is preferably performed under a condition such that the amount of the amino group is excessive with respect to the amount of the epoxy group in such a way that the compound (a2-3) is left unreacted. The condition to make the amount of the amino group excessive is preferably a condition such that the equivalent ratio of the amino group to the epoxy group satisfies, for example, amino group/epoxy group = 4/1 or more. Thereby, a mixture of the compound (a2-2) and the compound (a2-3) left unreacted can be obtained as exemplified in the model reaction represented by the following reaction equation (R-iii) for the case where the equivalent ratio is 4/1. R⁶ in the following reaction equation (R-iii) represents a divalent organic group derived from the compound (a2-3), W represents a divalent organic group derived from the compound having at least two epoxy groups, and R⁶ and W are synonymous with R⁶ and W in formula (6.2), respectively.

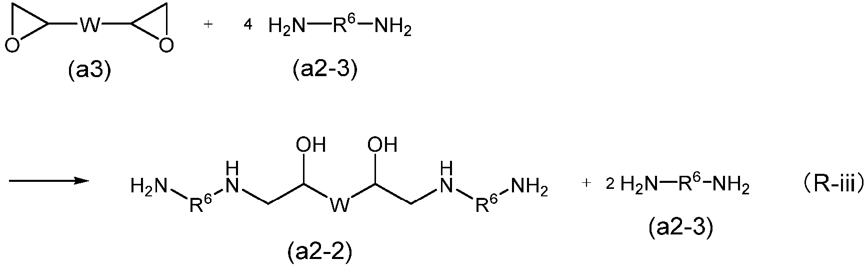

As the compound (a2-3) which can be used as a raw material for the compound (a2-2), any of conventionally known compounds (a2-3) can be used. Examples of a suitable compound (a2-3) include: chain aliphatic polyamines, such as ethylenediamine, 1,3-diaminopropane, 1,4-diaminobutane, 1,6-diaminohexane (another name: hexamethylenediamine), 1,8-diaminooctane, 1,10-diaminodecane, and 1,12-diaminododecane; cyclic aliphatic polyamines, such as isophoronediamine, norbornanediamine, 1,6-cyclohexanediamine, piperazine, bis(aminopropyl)piperazine, and 2,5-diaminopyridine; aliphatic polyamines having an aromatic ring, such as xylylenediamine; and aromatic polyamines, such as meta-phenylenediamine and diaminodiphenylmethane. One of, or two or more of these can be used. Among these, the compound (a2-3) is preferably a chain aliphatic polyamine.

Further, as the epoxy compound (a3) which can be used as a raw material for the compound (a2-2), a compound having a structure similar to that of the epoxy compound which is used as the raw material component for the above-described compound (a1) having at least two five-membered cyclic carbonate structures is preferably used. Specifically, an epoxy compound such that W in the epoxy compound (a3) in reaction equation (R-iii) (W in formula (6.2)) takes the same structure as X described above in formula (1.2) is more preferably used. The epoxy compound (a3) is preferably a compound represented by the following formula (a3-1), and R^{W} in the following formula (a3-1) can be any of the divalent organic groups represented by R^{X} described above in formula (a1-3) and is more preferably the same group as R^{X}.

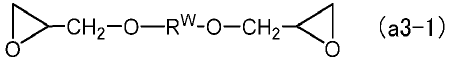

The compound (a2-2) which is obtained in the first reaction step as described above and is represented by formula (a2-2), as well as the compound (a2-3) which is used as a raw material for the compound (a2-2), can be subjected to polyaddition reaction with the above-described compound (a1) having at least two five-membered cyclic carbonate structures. The imino group (-NH-) in the compound (a2-2) does not react with the compound (a1), and therefore a polyhydroxyurethane containing the imino group in the main chain can be synthesized. By using this polyhydroxyurethane containing the imino group for the next reaction (introduction step), which will be described later, as an intermediate product, the polyhydroxyurethane resin (2A) having carboxy groups and containing a structure represented by formula (6.2) can be obtained.

That is, by performing a step of subjecting at least the compound (a2-2) and the compound (a1) to polyaddition reaction (hereinafter, sometimes described as "second reaction step"), a polyhydroxyurethane intermediate product having a structure such that Z² in formula (1.2) is represented by the following formula (Z_{M}) and containing a structural unit corresponding to formula (1.2) can be obtained. By introducing a chemical structure having carboxy groups into the imino group (-NH-) in this polyhydroxyurethane intermediate product through the introduction step, which will be described later, the polyhydroxyurethane resin (2A) containing a structural unit represented by formula (1.2) can be obtained. R⁶ and W in the following formula (Z_{M}) are synonymous with R⁶ and W in formula (6.2), respectively.

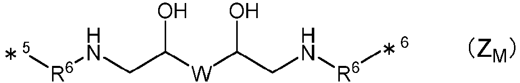

In the second reaction step for obtaining the above-described polyhydroxyurethane intermediate product, the compound (a1) having at least two five-membered cyclic carbonate structures is more preferably subjected to polyaddition reaction with a product in the first reaction step (a mixture of the compound (a2-2) and the compound (a2-3)) following the first reaction step. By using the product in the first reaction step, operations, such as isolating the compound (a2-2) can be omitted, so that the production efficiency can be enhanced and the carboxy groups can be introduced in an appropriate amount. By this method, a polyhydroxyurethane intermediate product containing a structural unit in which the compound (a2-2) and the compound (a1) are polymerized (a structural unit corresponding to formula (1.2) wherein Z² described above is represented by formula (Z_{M})) and a structural unit in which the compound (a2-3) and the compound (a1) are polymerized, the structural unit represented by the following formula (1.3), can be obtained. By performing the introduction step, which will be described later, on the imino group (-NH-) in this polyhydroxyurethane intermediate product, the polyhydroxyurethane resin (2A) further containing a structural unit represented by formula (1.3) together with a structural unit represented by formula (1.2) can be obtained. In this case, to obtain the compound (a2-2), the condition such that the amount of the compound (a2-3) is excessive is preferable as described above, and therefore in the polyhydroxyurethane resin (2A), the content by percentage of the structural unit represented by formula (1.3) in the polyhydroxyurethane resin (2A) is preferably larger than the content by percentage of the structural unit represented by formula (1.2).

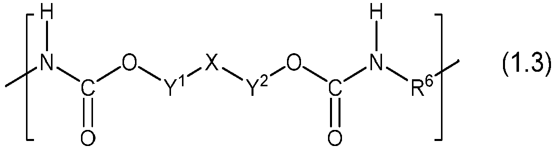

In formula (1.3), X, Y¹, and Y² are synonymous with X, Y¹, and Y² in formula (1.2), respectively, and R⁶ is synonymous with R⁶ in formula (6.2).

Both of the reaction conditions in the first reaction step and the second reaction step can be set to a condition of, for example, a temperature of 40 to 200°C for about 4 to about 24 hours. Both of the reactions in the first reaction step and the second reaction step can also be performed without a solvent but are preferably performed in a hydrophilic solvent in view of the reaction in the next step and of the emulsification step. Examples of a suitable hydrophilic solvent include tetrahydrofuran, dioxane, dimethylformamide, N-methyl pyrrolidone, dimethyl sulfoxide, methanol, ethanol, propanol, ethylene glycol, propylene glycol, ethylene glycol monomethyl ether, ethylene glycol dimethyl ether, propylene glycol methyl ether, diethylene glycol monomethyl ether, and diethylene glycol dimethyl ether. Among the solvents enumerated above, examples of a preferred solvent include tetrahydrofuran having a boiling point at which distillation by evaporation after phase inversion emulsification is easily performed.

In the first reaction step and the second reaction step, the reactions can also be performed in the presence of a catalyst in order to facilitate the reactions. Examples of a suitable catalyst include: triethylamine, tributylamine, diazabicycloundecene (DBU), and triethylenediamine (DABCO); basic catalysts, such as pyridine and hydroxy pyridine; and Luis acid catalysts, such as tetrabutyltin and dibutyltin dilaurate.

### · Introduction of Carboxy Groups in Formula (6.2)

Next, a step (introduction step) of introducing a chemical structure having carboxy groups into the polyhydroxyurethane intermediate product obtained in the manner as described above is performed. In this introduction step, the polyhydroxyurethane intermediate product and a cyclic acid anhydride are reacted, and thereby the polyhydroxyurethane resin (2A) having a chemical structure site containing carboxy groups and represented by formula (6.2) can be obtained by the reaction between the imino group in the polyhydroxyurethane intermediate product and the cyclic acid anhydride.

Examples of the cyclic acid anhydride which can be used in the introduction step include: aliphatic acid anhydrides, such as succinic anhydride, maleic anhydride, itaconic anhydride, caronic anhydride, citraconic anhydride, glutaric anhydride, diglycolic anhydride, and 1,2,3,4-butane tetracarboxylic dianhydride; aromatic acid anhydrides, such as phthalic anhydride, trimellitic anhydride, 1,8-naphthalic anhydride, and pyromellitic anhydride; alicyclic acid anhydrides, such as 1,1-cyclohexane diacetic anhydride, 1-cyclohexene-1,2-dicarboxylic anhydride, 1,1-cyclopentane diacetic anhydride, and 5-norbornene-2,3-dicarboxylic anhydride; and derivatives thereof. One of, or two or more of these cyclic acid anhydrides can be used. Among these, compounds having a low molecular weight exhibit emulsion stability in a small use amount, and therefore, for example, the cyclic acid anhydride is preferably succinic anhydride or maleic anhydride.

Introduced carboxy groups may be left as they are, but in obtaining a water dispersion of the polyhydroxyurethane resin (2A), some parts or all of (preferably all of) the carboxy groups are preferably neutralized to make the polyhydroxyurethane resin (2A) into the form of a neutralized salt in advance in order to facilitate ionization in water. Examples of the basic compound which is used for the neutralization include organic amines, such as ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, and 2-amino-2-methyl-1-propanol; alkali metals, such as lithium, potassium, and sodium; and inorganic bases, such as sodium hydroxide, potassium hydroxide, calcium hydroxide, and ammonia, and one of, or two or more of these basic compounds can be used. Among these basic compounds, the basic compound is preferably volatilizable at the time of forming a coating film (film) because the water resistance of the coating film (film) is improved, and therefore the basic compound is preferably triethylamine for example.

When the chemical structure having carboxy groups is introduced, thereby a water dispersion of the polyhydroxyurethane resin (2A) can also easily be obtained. That is, in obtaining a solution of the polyhydroxyurethane resin (2A) by synthesizing the polyhydroxyurethane (2A), in which the chemical structure having carboxy groups is introduced, in the above-described hydrophilic solvent, phase inversion is preferably performed by slowly adding water to the solution. Thereby, an oil-in-water type (O/W type) emulsion can be obtained. The use amount of water to be added in performing the phase inversion can appropriately be determined according to the type, resin concentration, viscosity, and the like of the solvent which is used in synthesizing the polyhydroxyurethane resin (2A), but is preferably about 50 to about 200 parts by mass per 100 parts by mass of the resin (solid content) in the resin solution. By volatilizing the solvent by heating the O/W type emulsion, which is obtained by performing phase inversion emulsification, under a reduced pressure condition, the water dispersion of the polyhydroxyurethane resin (2A) can be obtained. With respect to this water dispersion of the polyhydroxyurethane resin (2A), the median diameter (d₅₀) based on volume, measured using a dynamic light scattering particle size distribution measurement analyzer, is preferably about 0.001 to about 10 µm.

Note that as the compound (a2) to which carboxy groups are to be introduced and which has an imino group, a compound other than the above-described compound (a2-2), the compound having an amino group at each terminal thereof (having two terminal amino groups; -NH₂ in one molecule) and having an imino group (-NH-) inside thereof may be used in addition to the above-described compound (a2-2). Examples of such a compound include diethylenetriamine, triethylenetetramine, imino bis propylamine, tetraethylenepentamine, N,N'-bis(3-aminopropyl)-1,3-propylenediamine, and N,N'-bis(3-aminopropyl)-1,4-butylenediamine.

As described above, the polyhydroxyurethane resin (2A) contains hydroxy groups, derived from the above-described structures represented by formulas (2) to (5), in the above-described structural unit represented by formula (1.2) and therefore can bring about a gas barrier function to a film made of a composite resin containing the polyhydroxyurethane resin (2A), which is different from a polyurethane resin generally obtained by subjecting an isocyanate compound and a polyol compound to addition reaction. From the viewpoint of this gas barrier ability, the viewpoint of film suitability, and other viewpoints, the polyhydroxyurethane resin (2A) preferably has a hydroxyl value in a range of 150 to 300 mgKOH/g. The hydroxyl value (mgKOH/g) in the present specification is a value which is measured in accordance with the stipulation of JIS K1557-1.

Further, the polyhydroxyurethane resin (2A) contains the above-described chemical structure site represented by formula (6.2) and having carboxy groups, and therefore the above-described composite resin composition can suitably be used as the form of a water dispersion (emulsion). The amount of the carboxy groups in the polyhydroxyurethane resin (2A) gives an influence on the emulsion stability in the case of preparing the emulsion and the water resistance of the film formed with the composite resin composition. From the above-described viewpoints of the emulsion stability and the water resistance of the film, the amount of the carboxy groups in the polyhydroxyurethane resin (2A) is preferably set in such a way that the acid value of the polyhydroxyurethane resin (2A) falls within a range of 15 to 50 mgKOH/g. Further, the degree of stability of emulsified particles is also influenced by the molecular weight of the resin, and therefore the weight average molecular weight of the polyhydroxyurethane resin (2A) is preferably in a range of 10000 to 100000.

### [Starch-based Compound (B)]

The gas barrier film and the composite resin composition, each of which is one embodiment of the present invention, each contain a starch-based compound (B) together with the above-described polyhydroxyurethane resin (A). The starch-based compound (B) preferably has a hydroxyl value of 30 to 1500 mgKOH/g. Examples of the starch-based compound (B) include high-amylose cornstarch, cornstarch, tapioca starch, sweet potato starch, potato starch, wheat starch, high-amylose wheat starch, rice starch, and dextrin, and processed starch obtained by chemically, physically, or enzymatically processing (decomposing) any of the raw materials for these. One of, or two or more of these starch-based compounds (B) can be used.

The starch is a natural polymer in which a large number of **α**-glucose molecules are polymerized through glycosidic linkages and has a hydroxy group, and therefore the starch-based compound (B) also has a hydroxy group. The hydroxy groups contained in the starch-based compound (B), as well as the hydroxy groups contained in the above-described polyhydroxyurethane resin (A), are crosslinked by the metal chelate compound (C), which will be described later. Therefore, in the composite resin which forms the gas barrier film, the polyhydroxyurethane resin (A) and the starch-based compound (B) form a composite favorably by the crosslinks due to the metal chelate compound (C).

As the starch-based compound (B), at least one of a hard-to-digest glucan obtained by subjecting sugar being a starch decomposition product and having a DE of 70 to 100 to re-condensation, and a processed product of the hard-to-digest glucan is preferably used because of high solubility and reactivity. As described in, for example, Japanese Patent Laid-Open No. 2016-050173, the hard-to-digest glucan and the processed product thereof are composed of a sugar condensate obtained by subjecting sugar being a starch decomposition product and having a DE of 70 to 100 to re-condensation. "DE (Dextrose Equivalent)" herein is an index of the degree of decomposition of a starch decomposition product and is a value of the amount of reducing sugar in a sample, the value expressed as the amount of glucose by the percentage based on the solid content. The hard-to-digest glucan means a glucan (glucose polymer) which is hard to digest and is known to have water-soluble dietary fiber faction plentifully. The hard-to-digest glucan is a compound whose chemical structure has a dendritic structure, and has various common names according to the bonding pattern. Examples of commercially available products include trade name "Fit Fiber #80" (manufactured by NIHON SHOKUHIN KAKO CO., LTD.). This product is a sugar condensate obtained by subjecting a decomposition product of starch having a DE of 87 to condensation by heating using active carbon as a catalyst.

The gas barrier film and the composite resin composition, each of which is one embodiment of the present invention, each have a content of the starch-based compound (B), based on 100 parts by mass of the polyhydroxyurethane resin (A), of 10 to 300 parts by mass. From the viewpoint of easily obtaining a sufficient effect of biodegradability due to the starch-based compound (B) and the viewpoint of enhancing the biomass degree of the gas barrier film, the content of the starch-based compound (B) is preferably 20 parts by mass or more, more preferably 30 parts by mass or more, and still more preferably 50 parts by mass or more. On the other hand, from the viewpoint of the water resistance and strength of the gas barrier film, the content of the starch-based compound (B) is preferably 200 parts by mass or less, more preferably 150 parts by mass or less, and still more preferably 100 parts by mass or less.

### [Metal Chelate Compound (C)]

The gas barrier film and the composite resin composition, each of which is one embodiment of the present invention, each contain a metal chelate compound (C) together with the above-described polyhydroxyurethane resin (A) and starch-based compound (B). As described above, the metal chelate compound (C) can crosslink the polyhydroxy urethane resin (A) and the starch-based compound (B) and functions as a crosslinking agent. Accordingly, in the gas barrier film made of the composite resin composition, the metal chelate compound (C) crosslinking the polyhydroxyurethane resin (A) and the starch-based compound (B) is contained.

Examples of a suitable metal in the metal chelate compound (C) include titanium, zirconium, and aluminum. Examples of a suitable metal chelate compound (C) include titanium chelate compounds, such as titanium lactate, titanium lactate ammonium salt, titanium diethanolaminate, titanium triethanolaminate (such as, for example, titanium diisopropoxy bis(triethanolaminate)), titanium aminoethyl aminoethanolate, titanium acetyl acetonate (such as, for example, titanium diisopropoxy bis(acetyl acetonate)), titanium octylene glycolate, titanium tetraacetylacetonate, titanium ethylacetoacetate (such as, for example, titanium diisopropoxy bis(ethyl acetoacetate), and a titanium dodecylbenzenesulfonate compound; zirconium chelate compounds, such as a zirconyl chloride compound, zirconium lactate ammonium salt, zirconium tetraacetylacetonate, and zirconium tributoxymonoacethylacetonate; and aluminum chelate compounds, such as aluminum tris(acetylacetonate), aluminum bis ethylacetoacetate monoacetylacetonate, and aluminum tris (ethylacetoacetate).

Among the metal chelate compounds given above, the metal chelate compound is preferably a titanium chelate compound or a zirconium chelate compound, and at least one of a water-soluble titanium chelate compound (such as, for example, titanium lactate, titanium lactate ammonium salt, titanium diethanolaminate, titanium triethanolaminate, or titanium aminoethyl aminoethanolate) and a water-soluble zirconium chelate compound (such as, for example, a zirconyl chloride compound or zirconium lactate ammonium salt) is more preferably used. Among these, at least one of titanium triethanolaminate and zirconium lactate ammonium salt is still more preferably used. One of, or two or more of the metal chelate compounds given above can be used.

The crosslinking of the hydroxy groups of the polyhydroxyurethane resin and crosslinking of the hydroxy groups of the starch-based compound (B) by the metal chelate compound (C) do not inhibit the crystallinity of the polyhydroxyurethane resin (A) in particular because the distance between crosslinks is short. Because of this, the crosslinks due to the metal chelate compound (C) can be generated without lowering the gas barrier ability. In the present specification, crosslinks due to the metal chelate compound (C) include both of crosslinking between the metal chelate compound (C) and the polyurethane resin (A) or the starch-based compound (B) alone and crosslinking between molecules of the polyhydroxyurethane resin (A) and the starch-based compound (B) by the metal chelate compound (C).

The composite resin composition of one embodiment of the present invention contains the metal chelate compound (C), and therefore a uniform coat due to the crosslinking of the polyhydroxyurethane resin (A) and the starch-based compound (B) can be formed. Accordingly, by using the composite resin composition, a gas barrier film of a uniform coat can be formed. On the other hand, when a resin composition obtained by merely mixing the polyhydroxyurethane resin (A) and the starch-based compound (B) without using the metal chelate compound (C) is used, the water resistance of a resultant film is low because the starch-based compound (B) that is easily dissolved in water is used. In contrast, when the composite resin composition further containing the metal chelate compound (C) is used, the polyhydroxyurethane resin (A) and the starch-based compound (B) are bonded by crosslinks through the metal chelate compound (C), and thereby a gas barrier film of a uniform coat, the gas barrier film having water resistance, can be obtained.

The use amount of the metal chelate compound (C) is preferably an amount such that a certain amount of the hydroxy groups of the polyhydroxyurethane resin (A) is left in order not to lower the gas barrier ability of the formed film. From this viewpoint, the metal chelate compound (C) is preferably used in an amount of crosslinking 50% or less of the hydroxy groups of the polyhydroxyurethane resin (A). From such a viewpoint, the content of the metal chelate compound (C) in the gas barrier film and the composite resin composition is preferably 1 to 50 parts by mass, more preferably 5 to 40 parts by mass, and still more preferably 10 to 30 parts by mass, based on 100 parts by mass of the polyhydroxyurethane resin (A). On the other hand, from the viewpoint of enhancing the gas barrier ability and strength (toughness) of the film, the content of the metal chelate compound (C) is preferably 30 parts by mass or less, and more preferably 25 parts by mass or less.

### [Additional Components]

Note that in the gas-barrier film and composite resin composition, each of which is one embodiment of the present invention, an additional crosslinking agent which reacts with a hydroxy group may be used together with the metal chelate compound (C) in a range where the object of the present invention is not impaired. Examples of the additional crosslinking agent include a urea resin, a melamine resin, an epoxy resin, a polyisocyanate, an acid anhydride, a silane coupling agent, and a metal crosslinking agent, such as titanium.

Further, the gas barrier film and the composite resin composition, each of which is one embodiment of the present invention, may contain a layered clay mineral. When the layered clay mineral is contained in the gas barrier film and the composite resin composition, a further improvement in the gas barrier ability can thereby be expected. The layered clay mineral is a mineral containing a layered silicate mineral (phyllosilicate mineral) as a main component and having a layered structure. Examples of the layered clay mineral include montmorillonite, saponite, hectorite, vermiculite, kaolinite, and mica. One of these layered clay minerals may be used alone, or two or more of these layered clay minerals may be used together, and these layered clay minerals can be used regardless of being a natural product or a synthesized product. Among these, the layered clay mineral is preferably montmorillonite, saponite, or mica. Further, each of the gas barrier film and the composite resin composition may contain an inorganic filler other than the layered clay mineral. Examples of the inorganic filler include silica, calcium carbonate, titanium oxide, and glass fiber, and one of, or two or more of the inorganic fillers can be used.

### [Method for Producing Gas Barrier Film]

The gas barrier film of one embodiment of the present invention can easily be produced by applying the above-described composite resin composition. First of all, in the method for producing this gas barrier film, a water dispersion (emulsion) of the polyhydroxyurethane resin (A) is preferably prepared as a resin composition containing the polyhydroxyurethane resin (A). Subsequently, a composite resin composition (coating liquid) is preferably obtained by blending 10 to 300 parts by mass of the starch-based compound (B), based on 100 parts by mass of the polyhydroxyurethane resin (A) (solid content of the water dispersion), and a predetermined amount of the metal chelate compound (C) in the water dispersion. By applying and drying this composite resin composition in the form of a water dispersion, the gas barrier film composed of a coating film of the composite resin composition can be produced.

Examples of the method of applying the above-described composite resin composition include applying the composite resin composition on a substrate, such as a polyester film (for example, PET film), with a gravure coater, a knife coater, a reverse coater, a bar coater, a spray coater, a slit coater, or the like to volatilize water and a residual solvent. In this manner, a laminate film provided with a substrate and a coating film (gas barrier film) formed with the composite resin composition on at least one surface of the substrate can be obtained. Further, by releasing the coating film formed with the composite resin composition from the substrate, a gas barrier film formed with the composite resin composition can also be obtained.

In drying the applied composite resin composition, a condition under which crosslinking reaction by the metal chelate compound (C) occurs sufficiently is preferably adopted. For example, in the case where a water-soluble titanium chelate compound, which is suitable as the metal chelate compound (C), is used, drying is preferably performed at a temperature of about 80 to about 140°C for about 10 to about 120 minutes from the viewpoint of enhancing the productivity of the gas barrier film.

The thickness of the gas barrier film is preferably in a range of 0.1 to 100 **µ**m, more preferably in a range of 1 to 100 **µ**m, and still more preferably in a range of 10 to 100 **µ**m. The oxygen permeability of the gas barrier film is preferably 50 mL/m²·day·atm or less, and more preferably 40 mL/m²·day·atm or less, at a temperature of 23°C and a relative humidity of 65%RH. The oxygen permeability (mL/m²·day·atm) in the present specification is a value measured using oxygen as a gas in accordance with the stipulation of JIS K7126-1.

As described above in detail, the gas barrier film of one embodiment of the present invention contains a particular polyurethane resin (A) and starch-based compound (B) in particular proportions, and contains the metal chelate compound (C) crosslinking the polyhydroxyurethane resin (A) and the starch-based compound (B). Therefore, this gas barrier film is unlikely to impair the water resistance and has favorable gas barrier ability while being an environmentally compatible material which uses the starch-based compound (B) being biomass and which is capable of enhancing the biomass degree.

Note that the gas barrier film of one embodiment of the present invention can take the following constitution.
[1] A gas barrier film made of a composite resin, wherein the composite resin contains: a polyhydroxyurethane resin (A) containing a repeating unit represented by the formula (1.1), the repeating unit having, as a basic structure, a structural unit formed by polymerizing a compound (a1) having at least two five-membered cyclic carbonate structures and a compound (a2) having at least two amino groups; a starch-based compound (B); and a metal chelate compound (C) crosslinking the polyhydroxyurethane resin (A) and the starch-based compound (B), and has a content of the starch-based compound (B), based on 100 parts by mass of the polyhydroxyurethane resin (A), of 10 to 300 parts by mass.
[2] The gas barrier film according to [1], wherein the compound (a2) contains a compound represented by the formula (a2-1).
[3] A gas barrier film made of a composite resin, wherein the composite resin contains: a polyhydroxyurethane resin (A) containing a structural unit represented by the formula (1.2), the structural unit having, as a basic structure, a structural unit formed by polymerizing a compound (a1) having at least two five-membered cyclic carbonate structures and a compound (a2) having at least two amino groups; a starch-based compound (B); and a metal chelate compound (C) crosslinking the polyhydroxyurethane resin (A) and the starch-based compound (B), and has a content of the starch-based compound (B), based on 100 parts by mass of the polyhydroxyurethane resin (A), of 10 to 300 parts by mass.
[4] The gas barrier film according to [3], wherein the compound (a2) contains a compound represented by the formula (a2-2).
[5] The gas barrier film according to [3] or [4], wherein the polyhydroxyurethane resin (A) further contains a structural unit represented by the formula (1.3) together with the structural unit represented by the formula (1.2).
[6] The gas barrier film according to any one of [1] to [5], wherein the starch-based compound (B) contains at least one of a hard-to-digest glucan having a hydroxyl value in a range of 30 to 1500 mgKOH/g, the hard-to-digest glucan obtained by subjecting sugar being a starch decomposition product and having a DE of 70 to 100 to re-condensation, and a processed product of the hard-to-digest glucan.
[7] The gas barrier film according to any one of [1] to [6], wherein a content of the metal chelate compound (C), based on 100 parts by mass of the polyhydroxyurethane resin (A), is 1 to 50 parts by mass.
[8] The gas barrier film according to any one of [1] to [7], wherein the metal chelate compound (C) contains at least one of a water-soluble titanium chelate compound and a water-soluble zirconium chelate compound.
[9] The gas barrier film according to any one of [1] to [8], wherein the metal chelate compound (C) contains at least one of titanium triethanolaminate and zirconium lactate ammonium salt.
[10] The gas barrier film according to any one of [1] to [9], having a thickness in a range of 0.1 to 100 µm and an oxygen permeability at a temperature of 23°C and a relative humidity of 65% RH of 50 mL/m²·day·atm or less.
   Further, the composite resin composition of one embodiment of the present invention can take the following constitution.
[11] A composite resin composition for forming a gas barrier film, wherein the composite resin composition contains: a polyhydroxyurethane resin (A) containing a repeating unit represented by the formula (1.1), the repeating unit having, as a basic structure, a structural unit formed by polymerizing a compound (a1) having at least two five-membered cyclic carbonate structures and a compound (a2) having at least two amino groups; a starch-based compound (B); and a metal chelate compound (C) capable of crosslinking the polyhydroxyurethane resin (A) and the starch-based compound (B), and has a content of the starch-based compound (B), based on 100 parts by mass of the polyhydroxyurethane resin (A), of 10 to 300 parts by mass.
[12] The composite resin composition according to [11], wherein the compound (a2) contains a compound represented by the formula (a2-1).
[13] A composite resin composition for forming a gas barrier film, wherein the composite resin composition contains: a polyhydroxyurethane resin (A) containing a structural unit represented by the formula (1.2), the structural unit having, as a basic structure, a structural unit formed by polymerizing a compound (a1) having at least two five-membered cyclic carbonate structures and a compound (a2) having at least two amino groups; a starch-based compound (B); and a metal chelate compound (C) capable of crosslinking the polyhydroxyurethane resin (A) and the starch-based compound (B), and has a content of the starch-based compound (B), based on 100 parts by mass of the polyhydroxyurethane resin (A), of 10 to 300 parts by mass.
[14] The composite resin composition according to [13], wherein the compound (a2) contains a compound represented by the formula (a2-2).
[15] The composite resin composition according to [13] or [14], wherein the polyhydroxyurethane resin (A) further contains a structural unit represented by the formula (1.3) together with the structural unit represented by the formula (1.2).
[16] The composite resin composition according to any one of [11] to [15], wherein the starch-based compound (B) contains at least one of a hard-to-digest glucan having a hydroxyl value in a range of 30 to 1500 mgKOH/g, the hard-to-digest glucan obtained by subjecting sugar being a starch decomposition product and having a DE of 70 to 100 to re-condensation, and a processed product of the hard-to-digest glucan.
[17] The composite resin composition according to any one of [11] to [16], having a content of the metal chelate compound (C), based on 100 parts by mass of the polyhydroxyurethane resin (A), of 1 to 50 parts by mass.
[18] The composite resin composition according to any one of [11] to [17], wherein the metal chelate compound (C) contains at least one of a water-soluble titanium chelate compound and a water-soluble zirconium chelate compound.
[19] The composite resin composition according to any one of [11] to [18], wherein the metal chelate compound (C) contains at least one of titanium triethanolaminate and zirconium lactate ammonium salt.

### Examples

Hereinafter, the composite resin composition and the gas barrier film, each of which is one embodiment of the present invention, will more specifically be described giving Examples and Comparative Examples, but the composite resin composition and the gas barrier film are not limited to the following Examples. Note that in the following sentences, the descriptions of "parts" and "%" are on a mass basis ("parts by mass" and "% by mass," respectively) unless otherwise noted.

### [Synthesis Example 1: Synthesis of Compound (a11) Having Cyclic Carbonate Structures]

In a reaction container equipped with a stirrer and a reflux device having an atmosphere release port, 100 parts of a bisphenol A type epoxy resin having an epoxy equivalent of 187 (trade name "Epotohto YD-128," manufactured by NIPPON STEEL Chemical & Material CO., LTD.), 20 parts of sodium iodide (manufactured by FUJIFILM Wako Pure Chemical Corporation), and 150 parts of N-methyl-2-pyrrolidone were charged. Next, carbon dioxide was continuously injected while a resultant mixture was being stirred, and reaction was performed at 100°C for 10 hours. Subsequently, 300 parts of water was added to the solution after the completion of the reaction to precipitate a product, and the product was separated by filtration. A resultant white powder was recrystallized with toluene to obtain 52 parts (yield 42%) of white powder.

The compound obtained above was analyzed using a Fourier transform infrared spectrophotometer (FT-IR; trade name "IRAffinity-1," manufactured by SHIMADZU CORPORATION) to find that the absorption (peak) around 910 cm⁻¹ arising from the epoxy group of the raw material had disappeared, and the absorption (peak) arising from a carbonyl group of a carbonate group which was not present in the raw material was ascertained around 1800 cm⁻¹. Further, as a result of analysis by a high-performance liquid chromatograph (HPLC; trade name "LC-2000," manufactured by JASCO Corporation, column; FinePakSIL C18-T5, mobile phase: acetonitrile + water), it was found that the peak of the raw material had disappeared, a new peak had appeared, and the purity was 98%. Furthermore, as a result of measurement using a differential scanning calorimeter (DSC), it was found that the melting point was 178°C and the range of the melting point was ±5°C.

From the facts described above, it was ascertained that this powder was a compound represented by the following formula (a11) and having two five-membered cyclic carbonate structures in which cyclic carbonate groups were introduced by the reaction between the epoxy group and carbon dioxide. This is denoted as a compound (a11). The proportion of the component derived from carbon dioxide in this compound (a11) was 20.6% (a calculated value obtained from the molecular weight based on the chemical structure).

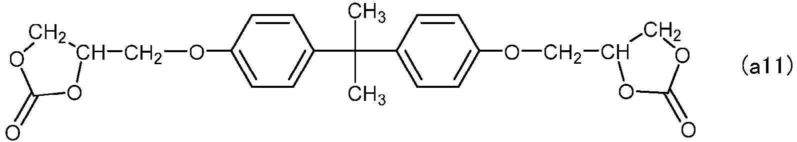

### [Synthesis Example 2:Synthesis of Compound (a12) Having Cyclic Carbonate Structures]

A compound (a12) represented by the following formula (a12) and having two five-membered cyclic carbonate structures was synthesized (yield 55%) by the same method as in Synthesis Example 1, except that the bisphenol A type epoxy resin used in Synthesis Example 1 was changed to hydroquinone diglycidyl ether having an epoxy equivalent of 115 (trade name "DENACOL EX203," manufactured by Nagase Chemtex Corporation). The resultant compound (a12) was a white crystal and had a melting point of 141°C. The result of FT-IR analysis was similar to that of the compound (a11) obtained in Synthesis Example 1, the absorption around 910 cm⁻¹ arising from the epoxy group of the raw material had disappeared, and the absorption arising from the carbonyl group of the carbonate group which was not present in the raw material was ascertained around 1800 cm⁻¹. The purity by the HPLC analysis was 97%. The proportion of the component derived from carbon dioxide in the compound (a12) was 28.0% (calculated value).

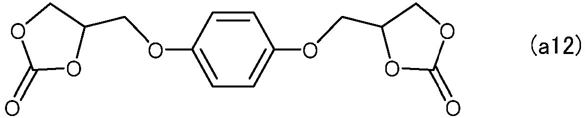

### [Production Example 1-1: Synthesis of Polyhydroxyurethane Resin (1A1)]

Into a reaction container equipped with a stirrer and a reflux device having an atmosphere release port, 42.8 parts of the compound (a11) obtained in Synthesis Example 1, 9.86 parts of diethylenetriamine (manufactured by Tokyo Chemical Industry Co., Ltd.), and further, 79.0 parts of tetrahydrofuran (THF) as a reaction solvent were added to perform reaction at a temperature of 60°C for 24 hours while a resultant mixture was being stirred. Part of the solution after the reaction was taken out as a sample and analyzed by FT-IR described above. As a result, the reaction was ended after ascertaining that the absorption (peak) around 1800 cm⁻¹ arising from the carbonyl group of the carbonate group had disappeared. Subsequently, 124 parts of tetrahydrofuran was added for dilution to this resin solution, and 9.4 parts of maleic anhydride (manufactured by Tokyo Chemical Industry Co., Ltd.) was then added to perform reaction at room temperature (25°C; the same applies to the following room temperatures). The reaction was ended after ascertaining by FT-IR that the peak at 1800 cm⁻¹ arising from carbonyl of the acid anhydride had disappeared, and thus a polyhydroxyurethane resin solution (solvent: THF) was obtained.

Into the reaction container in which the polyhydroxyurethane resin solution was obtained, 9.7 parts of triethylamine was charged. Subsequently, 144 parts of ion-exchanged water was slowly added to perform phase inversion emulsification while a resultant solution was being stirred at room temperature. Next, the inside of the reaction container was warmed to 50°C, and the pressure therein was reduced to distill away THF. Thereafter, the solid content was adjusted to 30% with ion-exchanged water to obtain a water dispersion in which a polyhydroxyurethane resin (1A1) corresponding to the polyhydroxyurethane resin (1A) containing a repeating unit represented by formula (1.1) is dispersed in water. This water dispersion was uniform in appearance. The particle size distribution of the polyhydroxyurethane resin (1A1) in the water dispersion was measured using a dynamic light scattering particle size distribution analyzer (trade name "UPA-EX150," manufactured by NIKKISO Co., Ltd.) to find that the median diameter (d₅₀) on a volume basis was 0.02 µm. Further, the stability of the resultant water dispersion was evaluated by storing it in a thermostatic chamber of 50°C to find that the water dispersion exhibited favorable stability.

### [Production Example 1-2: Synthesis of Polyhydroxyurethane Resin (1A2)]

Into a reaction container equipped with a stirrer and a reflux device having an atmosphere release port, 32.7 parts of the compound (a12) obtained in Synthesis Example 2, 9.86 parts of diethylenetriamine (manufactured by Tokyo Chemical Industry Co., Ltd.), and further, 64.4 parts of THF as a reaction solvent were added to perform reaction at a temperature of 60°C for 24 hours while a resultant mixture was being stirred. Part of the solution after the reaction was taken out as a sample and analyzed by FT-IR described above. As a result, the reaction was ended after ascertaining that the absorption (peak) around 1800 cm⁻¹ arising from the carbonyl group of the carbonate group had disappeared. Subsequently, 124 parts of THF was added for dilution to this resin solution, and 9.4 parts of maleic anhydride (manufactured by Tokyo Chemical Industry Co., Ltd.) was then added to perform reaction at room temperature. The reaction was ended after ascertaining by FT-IR described above that the peak at 1800 cm⁻¹ arising from carbonyl of the acid anhydride had disappeared, and thus a polyhydroxyurethane resin solution (solvent: THF) was obtained. Thereafter, phase inversion emulsification and the like were performed by the same method described in Production Example 1-1 to obtain a water dispersion in which a polyhydroxyurethane resin (1A2) corresponding to the polyhydroxyurethane resin (1A) containing a repeating unit represented by formula (1.1) is dispersed in water. This water dispersion was uniform in appearance. Further, the stability of the resultant water dispersion was evaluated by storing it in a thermostatic chamber of 50°C to find that the water dispersion exhibited favorable stability.

### [Production Example 1-3: Synthesis of Polyhydroxyurethane Resin (1A3)]

A water dispersion in which a polyhydroxyurethane resin (1A3) corresponding to the polyhydroxyurethane resin (1A) containing a repeating unit represented by formula (1.1) is dispersed in water was obtained through the same method and analysis as in Production Example 1-1, except that 9.4 parts of maleic anhydride used in Production Example 1-1 was changed to 14.2 parts of phthalic anhydride. This water dispersion was uniform in appearance. Further, the stability of the resultant water dispersion was evaluated by storing it in a thermostatic chamber of 50°C to find that the water dispersion exhibited favorable stability.

### [Production Example 1-4: Synthesis of Polyhydroxyurethane Resin (1A4)]

A water dispersion in which a polyhydroxyurethane resin (1A4) corresponding to the polyhydroxyurethane resin (1A) containing a repeating unit represented by formula (1.1) is dispersed in water was obtained through the same method and analysis as in Production Example 1-1, except that 9.86 parts of diethylenetriamine used in Production Example 1-1 was changed to 13.98 parts of triethylenetetramine. This water dispersion was uniform in appearance. Further, the stability of the resultant water dispersion was evaluated by storing it in a thermostatic chamber of 50°C to find that the water dispersion exhibited favorable stability.

### [Production Example 2-1: Synthesis of Polyhydroxyurethane Resin (2A1)]

In a reaction container equipped with a stirrer and a reflux device having an atmosphere release port, 10 parts of bisphenol A diglycidyl ether (trade name "jER828," manufactured by Mitsubishi Chemical Corporation), 30.1 parts of hexamethylenediamine (manufactured by Tokyo Chemical Industry Co., Ltd.), and further, 99 parts of tetrahydrofuran (THF) as a reaction solvent were added to perform reaction at a temperature of 60°C for 12 hours while a resultant mixture was being stirred. In this manner, a mixture of a compound corresponding to the above-described formula (a2-2), as a reaction product between bisphenol A diglycidyl ether and hexamethylenediamine, and hexamethylene diamine left unreacted was obtained. Next, 100 parts of the compound (a11) obtained in Synthesis Example 1 was put into the mixture to perform reaction at a temperature of 60°C for 24 hours while a resultant mixture was being stirred, and thus a resin solution was obtained. The resin solution after the reaction was analyzed by FT-IR to find that the absorption observed around 1800 cm⁻¹ and arising from the carbonyl group of the cyclic carbonate had disappeared completely and the absorption arising from a carbonyl group of a urethane bond was newly ascertained around 1760 cm⁻¹. The amine value measured using the resultant resin solution was 20.1 mgKOH/g as a value in terms of 100% of the resin content.

Subsequently, 124 parts of THF was added for dilution to the resin solution, and 5.2 parts of maleic anhydride (manufactured by Tokyo Chemical Industry Co., Ltd.) was then added to perform reaction at room temperature (25°C; the same applies to the following room temperatures). The reaction was ended after ascertaining by FT-IR that the peak at 1800 cm⁻¹ arising from carbonyl of the acid anhydride had disappeared, and thus a polyhydroxyurethane resin solution (solvent: THF) was obtained.

Into the reaction container in which the polyhydroxyurethane resin solution was obtained, 5.3 parts of triethylamine was charged. Subsequently, 339 parts of ion-exchanged water was slowly added to perform phase inversion emulsification while a resultant solution was being stirred at room temperature. Next, the inside of the reaction container was warmed to 50°C, and the pressure therein was reduced to distill away THF. Thereafter, the solid content was adjusted to 30% with ion-exchanged water to obtain a water dispersion in which a polyhydroxyurethane resin (2A1) corresponding to the polyhydroxyurethane resin (2A) containing a structural unit represented by formula (1.2) and a structural unit represented by formula (1.3) is dispersed in water. This water dispersion was uniform in appearance. The particle size distribution of the polyhydroxyurethane resin (2A1) in the water dispersion was measured using a dynamic light scattering particle size distribution analyzer (trade name "UPA-EX150," manufactured by NIKKISO Co., Ltd.) to find that the median diameter (d₅₀) on a volume basis was 0.02 µm. Further, the stability of the resultant water dispersion was evaluated by storing it in a thermostatic chamber of 50°C to find that the water dispersion exhibited favorable stability.

### [Production Example 2-2: Synthesis of Polyhydroxyurethane Resin (2A2)]

In a reaction container equipped with a stirrer and a reflux device having an atmosphere release port, 8.2 parts of hydroquinone diglycidyl ether (trade name "DENACOL EX203," manufactured by Nagase Chemtex Corporation), 41.6 parts of hexamethylenediamine, and further, 100 parts of THF as a reaction solvent were added to perform reaction at a temperature of 60°C for 12 hours while a resultant mixture was being stirred. In this manner, a mixture of a compound corresponding to the above-described formula (a2-2), as a reaction product between hydroquinone diglycidyl ether and hexamethylenediamine, and hexamethylene diamine left unreacted was obtained. Next, 100 parts of the compound (a12) obtained in Synthesis Example 2 was put into the mixture to perform reaction at a temperature of 60°C for 24 hours while a resultant mixture was being stirred, and thus a resin solution was obtained. The resin solution after the reaction was analyzed by FT-IR to find that the same result as described in Production Example 2-1 was ascertained. The amine value measured using the resultant resin solution was 26.2 mgKOH/g as a value in terms of 100% of the resin content.

Subsequently, 125 parts of THF was added for dilution to the resin solution, and 7.0 parts of maleic anhydride was then added to perform reaction at room temperature. The reaction was ended after ascertaining by FT-IR that the peak at 1800 cm⁻¹ arising from carbonyl of the acid anhydride had disappeared, and thus a polyhydroxyurethane resin solution (solvent: THF) was obtained. Phase inversion emulsification and the like were performed on this polyhydroxyurethane resin solution by the same method described in Production Example 2-1 to obtain a water dispersion in which a polyhydroxyurethane resin (2A2) corresponding to the polyhydroxyurethane resin (2A) containing a structural unit represented by formula (1.2) and a structural unit represented by formula (1.3) is dispersed in water. This water dispersion was uniform in appearance. Further, the stability of the resultant water dispersion was evaluated by storing it in a thermostatic chamber of 50°C to find that the water dispersion exhibited favorable stability.

### [Production Example 2-3: Synthesis of Polyhydroxyurethane Resin (2A3)]

A water dispersion in which a polyhydroxyurethane resin (2A3) corresponding to the polyhydroxyurethane resin (2A) containing a structural unit represented by formula (1.2) and a structural unit represented by formula (1.3) is dispersed in water was obtained through the same method and analysis as in Production Example 2-1, except that 5.2 parts of maleic anhydride used in Production Example 2-1 was changed to 7.9 parts of phthalic anhydride. This water dispersion was uniform in appearance. Further, the stability of the resultant water dispersion was evaluated by storing it in a thermostatic chamber of 50°C to find that the water dispersion exhibited favorable stability.

### [Production Example 2-4: Synthesis of Polyhydroxyurethane Resin (2A4)]

A water dispersion in which a polyhydroxyurethane resin (2A4) corresponding to the polyhydroxyurethane resin (2A) containing a structural unit represented by formula (1.2) and a structural unit represented by formula (1.3) is dispersed in water was obtained through the same method and analysis as in Production Example 2-1, except that 30.1 parts of hexamethylenediamine used in Production Example 2-1 was changed to 35.3 parts of meta-xylylenediamine (manufactured by MITSUBISHI GAS CHEMICAL COMPANY, INC.). Note that the amine value measured using the resin solution before performing the phase inversion emulsification and before introducing carboxy groups with maleic anhydride was 19.4 mgKOH/g as a value in terms of 100% of the resin content.

### [Example 1-1]

Into the water dispersion of the polyhydroxyurethane resin (1A1), which was obtained in Production Example 1-1, 100 parts of a hard-to-digest glucan (trade name "Fit Fiber #80," manufactured by NIHON SHOKUHIN KAKO CO., LTD.) based on 100 parts of the solid content (resin (1A1)) of the water dispersion was added as the starch-based compound (B), and further, 15 parts of titanium triethanolaminate (titanium diisopropoxy-bistriethanolaminate; trade name "ORGATIX TC-400," manufactured by Matsumoto Fine Chemical Co., Ltd.), which is a water-soluble titanium chelate compound, was added as the metal chelate compound (C). Subsequently, a resultant mixture was diluted with water in such a way that the total solid content was 30%, and thus a coating liquid being a composite resin composition (polyhydroxyurethane resin-starch hybrid composition) containing the polyhydroxyurethane resin (1A1), the starch-based compound (B), and the metal chelate compound (C) was obtained.

The coating liquid was applied uniformly with a bar coater on a corona-treated PET film having a thickness of 25 µm as a substrate in such a way that the dried film thickness was 20 µm, and drying was performed at 100°C for 20 minutes to crosslink the polyhydroxyurethane resin (1A1) and the starch-based compound (B) with the metal chelate compound (C). In this manner, a coating film (film made of the composite resin) formed on the substrate (PET film) with the composite resin composition was obtained. This laminated body including the substrate and the coating film provided on the substrate was used for evaluations which will be described later.

### [Example 1-2]

A coating liquid being a composite resin composition (polyhydroxyurethane resin-starch hybrid composition) was obtained by the same method as in Example 1-1, except that the use amount of the hard-to-digest glucan in Example 1-1 was changed from 100 parts to 50 parts. Further, a coating film (film made of the composite resin) formed on the substrate with the composite resin composition was obtained using this coating liquid by the same method as in Example 1-1. This laminated body including the substrate and the coating film provided on the substrate was used for evaluations which will be described later.

### [Example 1-3]

A coating liquid being a composite resin composition (polyhydroxyurethane resin-starch hybrid composition) was obtained by the same method as in Example 1-1, except that the use amount of titanium triethanolaminate in Example 1-1 was changed from 15 parts to 5 parts. Further, a coating film (film made of the composite resin) formed on the substrate with the composite resin composition was obtained using this coating liquid by the same method as in Example 1-1. This laminated body including the substrate and the coating film provided on the substrate was used for evaluations which will be described later.

### [Example 1-4]

A coating liquid being a composite resin composition (polyhydroxyurethane resin-starch hybrid composition) was obtained by the same method as in Example 1-1, except that the use amount of titanium triethanolaminate in Example 1-1 was changed from 15 parts to 30 parts. Further, a coating film (film made of the composite resin) formed on the substrate with the composite resin composition was obtained using this coating liquid by the same method as in Example 1-1. This laminated body including the substrate and the coating film provided on the substrate was used for evaluations which will be described later.

### [Example 1-5]

A coating liquid being a composite resin composition (polyhydroxyurethane resin-starch hybrid composition) was obtained by the same method as in Example 1-1, except that 15 parts of titanium triethanolaminate in Example 1-1 was changed to 30 parts of zirconium lactate ammonium salt (trade name "ORGATIX ZC-300," manufactured by Matsumoto Fine Chemical Co., Ltd.), which is a water-soluble zirconium chelate compound. Further, a coating film (film made of the composite resin) formed on the substrate with the composite resin composition was obtained using this coating liquid by the same method as in Example 1-1. This laminated body including the substrate and the coating film provided on the substrate was used for evaluations which will be described later.

### [Example 1-6]

A coating liquid being a composite resin composition (polyhydroxyurethane resin-starch hybrid composition) was obtained by the same method as in Example 1-1, except that the use amount of the hard-to-digest glucan in Example 1-1 was changed from 100 parts to 300 parts. Further, a coating film (film made of the composite resin) formed on the substrate with the composite resin composition was obtained using this coating liquid by the same method as in Example 1-1. This laminated body including the substrate and the coating film provided on the substrate was used for evaluations which will be described later.

### [Examples 1-7 to 1-9]

Coating liquids being composite resin compositions (polyhydroxyurethane resin-starch hybrid compositions) of Examples 1-7 to 1-9 were obtained by the same method as in Example 1-1, except that the water dispersion of the polyhydroxyurethane resin (1A1) used in Example 1-1 was changed to the water dispersions described below, respectively. Further, coating films (films made of the composite resins) each formed on the substrate with each of the composite resin compositions were obtained for Examples 1-7 to 1-9 using these coating liquids, respectively, by the same method as in Example 1-1. These laminated bodies each including the substrate and each coating film provided on the substrate were used for evaluations which will be described later.

In Example 1-7, the water dispersion of the polyhydroxyurethane resin (1A2) was used. In Example 1-8, the water dispersion of the polyhydroxyurethane resin (1A3) was used. In Example 1-9, the water dispersion of the polyhydroxyurethane resin (1A4) was used.

### [Comparative Example 1-1]

A coating liquid was obtained by the same method as in Example 1-1, except that titanium triethanolaminate used as the metal chelate compound (C) in Example 1-1 was not used. Further, a coating film (film) formed on the substrate with the coating liquid was obtained using this coating liquid by the same method as in Example 1-1. This laminated body including the substrate and the coating film provided on the substrate was used for evaluations which will be described later.

### [Comparative Example 1-2]

A coating liquid was obtained by the same method as in Example 1-1, except that the hard-to-digest glucan used as the starch-based compound (B) in Example 1-1 was not used. Further, a coating film (film) formed on the substrate with the coating liquid was obtained using this coating liquid by the same method as in Example 1-1. This laminated body including the substrate and the coating film provided on the substrate was used for evaluations which will be described later.

### [Example 2-1]

Into the water dispersion of the polyhydroxyurethane resin (2A1), which was obtained in Production Example 2-1, 100 parts of a hard-to-digest glucan (trade name "Fit Fiber #80," manufactured by NIHON SHOKUHIN KAKO CO., LTD.) based on 100 parts of the solid content (resin (2A1)) of the water dispersion was added as the starch-based compound (B), and further, 15 parts of titanium triethanolaminate (titanium diisopropoxy-bistriethanolaminate; trade name "ORGATIX TC-400," manufactured by Matsumoto Fine Chemical Co., Ltd.), which is a water-soluble titanium chelate compound, was added as the metal chelate compound (C). Subsequently, a resultant mixture was diluted with water in such a way that the total solid content was 30%, and thus a coating liquid being a composite resin composition (polyhydroxyurethane resin-starch hybrid composition) containing the polyhydroxyurethane resin (2A1), the starch-based compound (B), and the metal chelate compound (C) was obtained.

The coating liquid was applied uniformly with a bar coater on a corona-treated PET film having a thickness of 25 µm as a substrate in such a way that the dried film thickness was 20 µm, and drying was performed at 100°C for 20 minutes to crosslink the polyhydroxyurethane resin (1A1) and the starch-based compound (B) with the metal chelate compound (C). In this manner, a coating film (film made of the composite resin) formed on the substrate (PET film) with the composite resin composition was obtained. This laminated body including the substrate and the coating film provided on the substrate was used for evaluations which will be described later.

### [Example 2-2]

A coating liquid being a composite resin composition (polyhydroxyurethane resin-starch hybrid composition) was obtained by the same method as in Example 2-1, except that the use amount of the hard-to-digest glucan in Example 2-1 was changed from 100 parts to 50 parts. Further, a coating film (film made of the composite resin) formed on the substrate with the composite resin composition was obtained using this coating liquid by the same method as in Example 2-1. This laminated body including the substrate and the coating film provided on the substrate was used for evaluations which will be described later.

### [Example 2-3]

A coating liquid being a composite resin composition (polyhydroxyurethane resin-starch hybrid composition) was obtained by the same method as in Example 2-1, except that the use amount of titanium triethanolaminate in Example 2-1 was changed from 15 parts to 5 parts. Further, a coating film (film made of the composite resin) formed on the substrate with the composite resin composition was obtained using this coating liquid by the same method as in Example 2-1. This laminated body including the substrate and the coating film provided on the substrate was used for evaluations which will be described later.

### [Example 2-4]

A coating liquid being a composite resin composition (polyhydroxyurethane resin-starch hybrid composition) was obtained by the same method as in Example 2-1, except that the use amount of titanium triethanolaminate in Example 2-1 was changed from 15 parts to 30 parts. Further, a coating film (film made of the composite resin) formed on the substrate with the composite resin composition was obtained using this coating liquid by the same method as in Example 2-1. This laminated body including the substrate and the coating film provided on the substrate was used for evaluations which will be described later.

### [Example 2-5]

A coating liquid being a composite resin composition (polyhydroxyurethane resin-starch hybrid composition) was obtained by the same method as in Example 2-1, except that 15 parts of titanium triethanolaminate in Example 2-1 was changed to 30 parts of zirconium lactate ammonium salt (trade name "ORGATIX ZC-300," manufactured by Matsumoto Fine Chemical Co., Ltd.), which is a water-soluble zirconium chelate compound. Further, a coating film (film made of the composite resin) formed on the substrate with the composite resin composition was obtained using this coating liquid by the same method as in Example 2-1. This laminated body including the substrate and the coating film provided on the substrate was used for evaluations which will be described later.

### [Example 2-6]

A coating liquid being a composite resin composition (polyhydroxyurethane resin-starch hybrid composition) was obtained by the same method as in Example 2-1, except that the use amount of the hard-to-digest glucan in Example 2-1 was changed from 100 parts to 300 parts. Further, a coating film (film made of the composite resin) formed on the substrate with the composite resin composition was obtained using this coating liquid by the same method as in Example 2-1. This laminated body including the substrate and the coating film provided on the substrate was used for evaluations which will be described later.

### [Examples 2-7 to 2-9]

Coating liquids being composite resin compositions (polyhydroxyurethane resin-starch hybrid compositions) of Examples 2-7 to 2-9 were obtained by the same method as in Example 2-1, except that the water dispersion of the polyhydroxyurethane resin (2A1) used in Example 2-1 was changed to the water dispersions described below, respectively. Further, coating films (films made of the composite resins) each formed on the substrate with each of the composite resin compositions were obtained for Examples 2-7 to 2-9 using these coating liquids, respectively, by the same method as in Example 2-1. These laminated bodies each including the substrate and each coating film provided on the substrate were used for evaluations which will be described later.

In Example 2-7, the water dispersion of the polyhydroxyurethane resin (2A2) was used. In Example 2-8, the water dispersion of the polyhydroxyurethane resin (2A3) was used. In Example 2-9, the water dispersion of the polyhydroxyurethane resin (2A4) was used.

### [Comparative Example 2-1]

A coating liquid was obtained by the same method as in Example 2-1, except that titanium triethanolaminate used as the metal chelate compound (C) in Example 2-1 was not used. Further, a coating film (film) formed on the substrate with the coating liquid was obtained using this coating liquid by the same method as in Example 2-1. This laminated body including the substrate and the coating film provided on the substrate was used for evaluations which will be described later.

### [Comparative Example 2-2]

A coating liquid was obtained by the same method as in Example 2-1, except that the hard-to-digest glucan used as the starch-based compound (B) in Example 2-1 was not used. Further, a coating film (film) formed on the substrate with the coating liquid was obtained using this coating liquid by the same method as in Example 2-1. This laminated body comprising the substrate and the coating film provided on the substrate was used for evaluations which will be described later.

### [Biomass Degree]

The biomass degree of each coating film (film) obtained in Examples and Comparative Examples was calculated as the mass proportion (%) of the starch-based compound (B) based on the mass of the total solid content after drying according to the certification method for BIOMASS MARK specified by Japan Organics Recycling Association.

### [Evaluations]

### (Oxygen Permeability)

The oxygen permeability (mL/m²·day·atm) at a temperature of 23°C and a relative humidity of 65% RH was measured for each laminated body (laminated body including the substrate and the coating film) obtained in Examples and Comparative Examples and the substrate by a method in accordance with JIS K7126-1. Subsequently, the oxygen permeability of the coating film was determined by subtracting the measured value for the substrate from the measured value for the laminated body. An oxygen permeability analyzer (trade name "OX-TRAN2/21ML," manufactured by MOCON) was used for the measurement of the oxygen permeability. When the value of the oxygen permeability is lower, it shows that it is harder to permeate oxygen and accordingly the gas barrier ability is higher.

### (Water Resistance)

On the coating film of each laminated body (size: 5 cm square) obtained in Examples and Comparative Examples, one drop of water (about 40 µL) was dropped, and the laminated body was left to stand still at 25°C for 1 hour. Thereafter, the water was wiped away lightly with waste cloth, and the appearance of the coating film (film) was observed visually to evaluate the water resistance of the coating film according to the following evaluation criteria.
A: There is hardly a change in the coating film.
B: Slight whitening is ascertained in the coating film.
C: Remarkable whitening is ascertained in the coating film.

Results of the evaluations described above are shown in Table 1 (Table 1-1 and Table 1-2) and Table 2 (Table 2-1 and Table 2-2) together with the solid content composition (unit: part) of each coating liquid used in Examples and Comparative Examples.

**Table 1-1 Solid content composition (unit: part) and evaluation results of each coating liquid used in Examples and Comparative Examples**

| | Example | | | | | |
|---|---|---|---|---|---|---|
| | 1-1 | 1-2 | 1-3 | 1-4 | 1-5 | 1-6 |
| Polyhydroxyurethane resin (1A1) | 100 | 100 | 100 | 100 | 100 | 100 |
| Polyhydroxyurethane resin (1A2) | - | - | - | - | - | - |
| Polyhydroxyurethane resin (1A3) | - | - | - | - | - | - |
| Polyhydroxyurethane resin (1A4) | - | - | - | - | - | - |
| Hard-to-digest glucan | 100 | 50 | 100 | 100 | 100 | 300 |
| Titanium chelate compound | 15 | 15 | 5 | 30 | - | 15 |
| Zirconium chelate compound | - | - | - | - | 30 | - |
| Biomass degree | 47 | 30 | 49 | 43 | 43 | 72 |
| Oxygen permeability (mL/m²·day·atm) | 20 | 20 | 25 | 19 | 21 | 15 |
| Water resistance | A | A | B | A | A | B |

**Table 1-2 Solid content composition (unit: part) and evaluation results of each coating liquid used in Examples and Comparative Examples**

| | Example | | | Comparative Example | |
|---|---|---|---|---|---|
| | 1-7 | 1-8 | 1-9 | 1-1 | 1-2 |
| Polyhydroxyurethane resin (1A1) | - | - | - | 100 | 100 |
| Polyhydroxyurethane resin (1A2) | 100 | - | - | - | - |
| Polyhydroxyurethane resin (1A3) | - | 100 | - | - | - |
| Polyhydroxyurethane resin (1A4) | - | - | 100 | - | - |
| Hard-to-digest glucan | 100 | 100 | 100 | 100 | 0 |
| Titanium chelate compound | 15 | 15 | 15 | 0 | 15 |
| Zirconium chelate compound | - | - | - | - | - |
| Biomass degree | 47 | 47 | 47 | 50 | 0 |
| Oxygen permeability (mL/m²·day·atm) | 10 | 20 | 19 | 25 | 20 |
| Water resistance | A | A | A | C | A |

**Table 2-1 Solid content composition (unit: part) and evaluation results of each coating liquid used in Examples and Comparative Examples**

| | Examples | | | | | |
|---|---|---|---|---|---|---|
| | 2-1 | 2-2 | 2-3 | 2-4 | 2-5 | 2-6 |
| Polyhydroxyurethane resin (2A1) | 100 | 100 | 100 | 100 | 100 | 100 |
| Polyhydroxyurethane resin (2A2) | - | - | - | - | - | - |
| Polyhydroxyurethane resin (2A3) | - | - | - | - | - | - |
| Polyhydroxyurethane resin (2A4) | - | - | - | - | - | - |
| Hard-to-digest glucan | 100 | 50 | 100 | 100 | 100 | 300 |
| Titanium chelate compound | 15 | 15 | 5 | 30 | - | 15 |
| Zirconium chelate compound | - | - | - | - | 30 | - |
| Biomass degree | 47 | 30 | 49 | 43 | 43 | 72 |
| Oxygen permeability (mL/m²·day·atm) | 20 | 20 | 25 | 19 | 21 | 15 |
| Water resistance | A | A | B | A | A | B |

**Table 2-2 Solid content composition (unit: part) and evaluation results of each coating liquid used in Examples and Comparative Examples**

| | Example | | | Comparative Example | |
|---|---|---|---|---|---|
| | 2-7 | 2-8 | 2-9 | 2-1 | 2-2 |
| Polyhydroxyurethane resin (2A1) | - | - | - | 100 | 100 |
| Polyhydroxyurethane resin (2A2) | 100 | - | - | - | - |
| Polyhydroxyurethane resin (2A3) | - | 100 | - | - | - |
| Polyhydroxyurethane resin (2A4) | - | - | 100 | - | - |
| Hard-to-digest glucan | 100 | 100 | 100 | 100 | - |
| Titanium chelate compound | 15 | 15 | 15 | - | 15 |
| Zirconium chelate compound | - | - | - | - | - |
| Biomass degree | 47 | 47 | 47 | 50 | 0 |
| Oxygen permeability (mL/m²·day·atm) | 10 | 20 | 15 | 25 | 20 |
| Water resistance | A | A | A | C | A |

As shown in Table 1, it was ascertained that each of the composite resin compositions of Examples can form a film in which the water resistance is unlikely to be impaired and which has favorable gas barrier ability while being an environmentally compatible material using a starch-based compound being biomass.

As can be seen from the results of Examples described above, it can be expected that the gas barrier film and the composite resin composition, each of which is one embodiment of the present invention, bring about not only a gas barrier function due to the polyhydroxyurethane resin (A) but also a favorable water resistance function. Therefore, the practicability of the gas barrier film and the composite resin composition is further improved, so that effective utilization thereof is expected.

## Claims

1. A gas barrier film made of a composite resin, wherein
the composite resin comprises:
a polyhydroxyurethane resin (A) comprising a repeating unit represented by the following formula (1.1) or comprising a structural unit represented by the following formula (1.2), the repeating units having, as a basic structure, a structural unit formed by polymerizing a compound (a1) having at least two five-membered cyclic carbonate structures and a compound (a2) having at least two amino groups;
a starch-based compound (B); and
a metal chelate compound (C) crosslinking the polyhydroxyurethane resin (A) and the starch-based compound (B), and
has a content of the starch-based compound (B), based on 100 parts by mass of the polyhydroxyurethane resin (A), of 10 to 300 parts by mass: 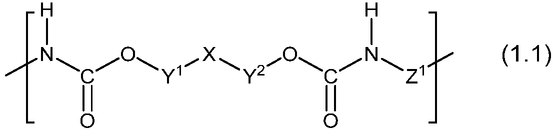
wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z¹ represents a divalent organic group represented by the following formula (6.1): 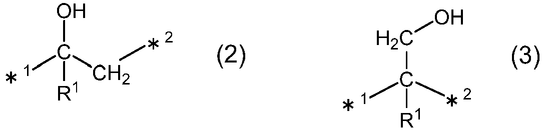 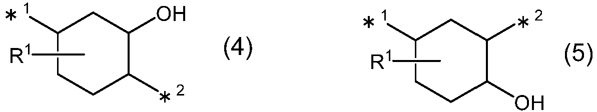
wherein each R¹ independently represents a hydrogen atom or a methyl group, *¹ represents a chemical bond with X in the formula (1.1), or when X is a direct bond, *¹ represents a chemical bond with the other Y, and *² represents a chemical bond with O in the formula (1.1), 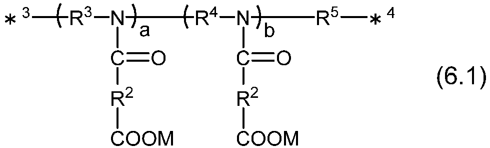
wherein R² represents a divalent hydrocarbon group optionally comprising an oxygen atom and a nitrogen atom in a structure thereof; R³, R⁴, and R⁵ each independently represent a C1-10 alkylene group optionally comprising an ether bond in a structure thereof; each M independently represents a hydrogen atom or a counter ion that forms a salt structure; a represents an integer of 0 to 3, and b represents an integer of 1 to 5; and *³ represents a chemical bond with N in Z¹ in the formula (1.1), and *⁴ represents the other chemical bond in Z¹; 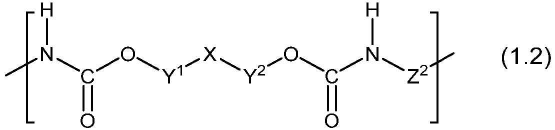
wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z² represents a divalent organic group represented by the following formula (6.2) comprising a structure derived from the compound (a2): 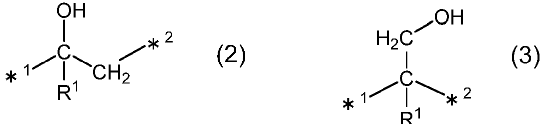 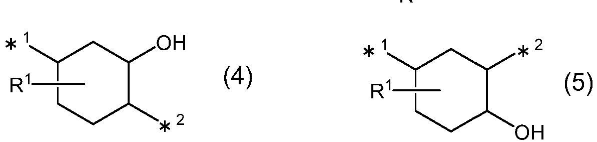
wherein each R¹ independently represents a hydrogen atom or a methyl group, *¹ represents a chemical bond with X in the formula (1.2), or when X is a direct bond, *¹ represents a chemical bond with the other Y, and *² represents a chemical bond with O in the formula (1.2), 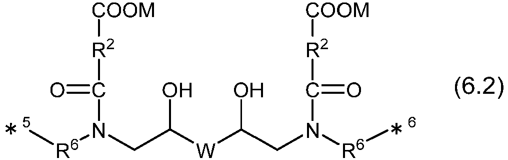
wherein R² represents a divalent hydrocarbon group optionally comprising an oxygen atom and a nitrogen atom in a structure thereof; each R⁶ independently represents a divalent, C1-15 aliphatic hydrocarbon group, C4-15 alicyclic hydrocarbon group, or C6-15 aromatic hydrocarbon group, and in a structure of each of these groups, an ether bond, a sulfonyl bond, a hydroxy group, and a halogen atom are optionally contained; W represents a divalent C1-30 aliphatic hydrocarbon group, C4-40 alicyclic hydrocarbon group, or C6-40 aromatic hydrocarbon group, and in a structure of each of these groups, an ether bond, an amino bond, a sulfonyl bond, an ester bond, a hydroxy group, and a halogen atom, and a polyalkylene glycol chain having a C2-6 alkylene group and 1 to 30 repeating units are optionally contained; each M independently represents a hydrogen atom or a counter ion that forms a salt structure; and *⁵ represents a chemical bond with N in Z² in the formula (1.2), and *⁶ represents the other chemical bond in Z².

2. The gas barrier film according to claim 1, wherein the compound (a2) of the polyhydroxyurethane resin (A) comprising a repeating unit represented by the formula (1.1), comprises a compound represented by the following formula (a2-1): 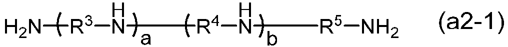 wherein R³, R⁴, and R⁵ each independently represent a C1-10 alkylene group optionally comprising an ether bond in a structure thereof, a represents an integer of 0 to 3, and b represents an integer of 1 to 5.

3. The gas barrier film according to claim 1, wherein the compound (a2) of the polyhydroxyurethane resin (A) comprising a repeating unit represented by the formula (1.2) comprises a compound represented by the following formula (a2-2): 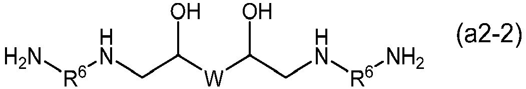 wherein R⁶ and W are synonymous with R⁶ and W in the formula (6.2), respectively.

4. The gas barrier film according to claim 1 or 3, wherein the polyhydroxyurethane resin (A) comprising a repeating unit represented by the formula (1.2) further comprises a structural unit represented by the following formula (1.3) together with the structural unit represented by the formula (1.2): 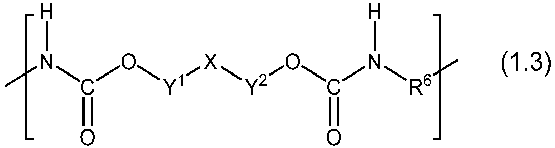 wherein X, Y¹, and Y² are synonymous with X, Y¹, and Y² in the formula (1.2), respectively, and R⁶ is synonymous with R⁶ in the formula (6.2).

5. The gas barrier film according to any one of claims 1 to 4, wherein the starch-based compound (B) comprises at least one of a hard-to-digest glucan having a hydroxyl value in a range of 30 to 1500 mgKOH/g, the hard-to-digest glucan obtained by subjecting sugar being a starch decomposition product and having a **DE** of 70 to 100 to re-condensation, and a processed product of the hard-to-digest glucan; and/or
wherein a content of the metal chelate compound (C), based on 100 parts by mass of the polyhydroxyurethane resin (A), is 1 to 50 parts by mass; and/or wherein the metal chelate compound (C) comprises at least one of a water-soluble titanium chelate compound and a water-soluble zirconium chelate compound; and/or
wherein the metal chelate compound (C) comprises at least one of titanium triethanolaminate and zirconium lactate ammonium salt; and/or having a thickness in a range of 0.1 to 100 µm and an oxygen permeability at a temperature of 23°C and a relative humidity of 65% RH of 50 mL/m²·day·atm or less.

6. A composite resin composition for forming a gas barrier film, wherein the composite resin composition comprises:
a polyhydroxyurethane resin (A) comprising a repeating unit represented by the following formula (1.1) or comprising a repeating unit represented by the following formula (1.2), the repeating units having, as a basic structure, a structural unit formed by polymerizing a compound (a1) having at least two five-membered cyclic carbonate structures and a compound (a2) having at least two amino groups;
a starch-based compound (B); and
a metal chelate compound (C) capable of crosslinking the polyhydroxyurethane resin (A) and the starch-based compound (B), and has a content of the starch-based compound (B), based on 100 parts by mass of the polyhydroxyurethane resin (A), of 10 to 300 parts by mass: 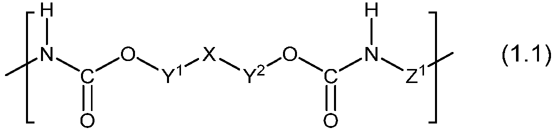
wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z¹ represents a divalent organic group represented by the following formula (6.1): 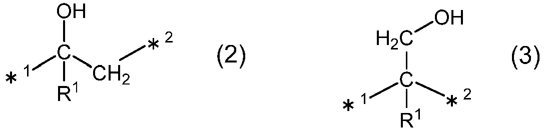 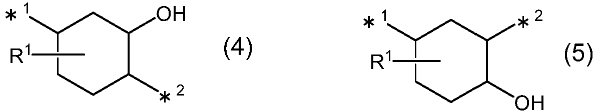
wherein each R¹ independently represents a hydrogen atom or a methyl group, *¹ represents a chemical bond with X in the formula (1.1), or when X is a direct bond, *¹ represents a chemical bond with the other Y, and *² represents a chemical bond with O in the formula (1.1), 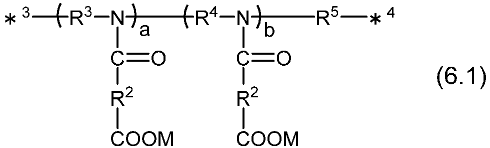
wherein R² represents a divalent hydrocarbon group optionally comprising an oxygen atom and a nitrogen atom in a structure thereof; R³, R⁴, and R⁵ each independently represent a C1-10 alkylene group optionally comprising an ether bond in a structure thereof; each M independently represents a hydrogen atom or a counter ion that forms a salt structure; a represents an integer of 0 to 3, and b represents an integer of 1 to 5; and *³ represents a chemical bond with N in Z¹ in the formula (1.1), and *⁴ represents the other chemical bond in Z¹; 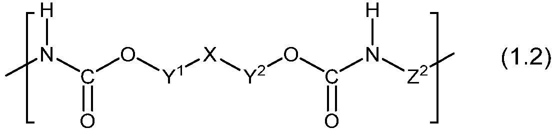
wherein X represents a divalent organic group derived from the compound (a1) or a direct bond; Y¹ and Y² each independently represent a divalent organic group represented by any one of the following formulas (2) to (5), and two or more of the divalent organic groups represented by the following formulas (2) to (5) are optionally mixed in a molecule of the polyhydroxyurethane resin (A); and Z² represents a divalent organic group represented by the following formula (6.2) comprising a structure derived from the compound (a2): 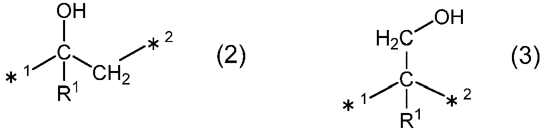 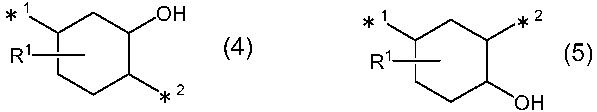
wherein each R¹ independently represents a hydrogen atom or a methyl group, *¹ represents a chemical bond with X in the formula (1.2), or when X is a direct bond, *¹ represents a chemical bond with the other Y, and *² represents a chemical bond with O in the formula (1.2), 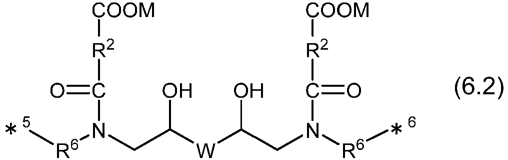
wherein R² represents a divalent hydrocarbon group optionally comprising an oxygen atom and a nitrogen atom in a structure thereof; each R⁶ independently represents a divalent, C1-15 aliphatic hydrocarbon group, C4-15 alicyclic hydrocarbon group, or C6-15 aromatic hydrocarbon group, and in a structure of each of these groups, an ether bond, a sulfonyl bond, a hydroxy group, and a halogen atom are optionally contained; W represents a divalent, C1-30 aliphatic hydrocarbon group, C4-40 alicyclic hydrocarbon group, or C6-40 aromatic hydrocarbon group, and in a structure of each of these groups, an ether bond, an amino bond, a sulfonyl bond, an ester bond, a hydroxy group, and a halogen atom, and a polyalkylene glycol chain having a C2-6 alkylene group and 1 to 30 repeating units are optionally contained; each M independently represents a hydrogen atom or a counter ion that forms a salt structure; and *⁵ represents a chemical bond with N in Z² in the formula (1.2), and *⁶ represents the other chemical bond in Z².

7. The composite resin composition according to claim 6, wherein the compound (a2) of the polyhydroxyurethane resin (A) comprising a repeating unit represented by the formula (1.1), comprises a compound represented by the following formula (a2-1): 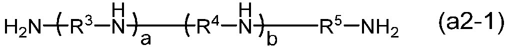 wherein R³, R⁴, and R⁵ each independently represent a C1-10 alkylene group optionally comprising an ether bond in a structure thereof, a represents an integer of 0 to 3, and b represents an integer of 1 to 5.

8. The composite resin composition according to claim 6, wherein the compound (a2) of the polyhydroxyurethane resin (A) comprising a repeating unit represented by the formula (1.2)comprises a compound represented by the following formula (a2-2): 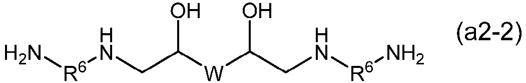 wherein R⁶ and W are synonymous with R⁶ and W in the formula (6.2), respectively.

9. The composite resin composition according to claim 6 or 8, wherein the polyhydroxyurethane resin (A) comprising a repeating unit represented by the formula (1.2) further comprises a structural unit represented by the following formula (1.3) together with the structural unit represented by the formula (1.2): 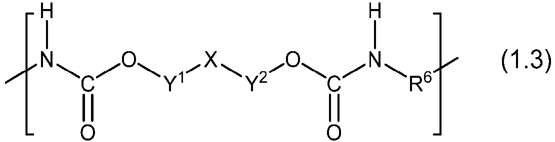 wherein X, Y¹, and Y² are synonymous with X, Y¹, and Y² in the formula (1.2), respectively, and R⁶ is synonymous with R⁶ in the formula (6.2).

10. The composite resin composition according to any one of claims 6 to 9, wherein the starch-based compound (B) comprises at least one of a hard-to-digest glucan having a hydroxyl value in a range of 30 to 1500 mgKOH/g as determined in accordance with JIS K1557-1, the hard-to-digest glucan obtained by subjecting sugar being a starch decomposition product and having a DE of 70 to 100 to re-condensation, and a processed product of the hard-to-digest glucan, wherein "DE (Dextrose Equivalent)" is an index of the degree of decomposition of a starch decomposition product and is a value of the amount of reducing sugar in a sample, the value expressed as the amount of glucose by the percentage based on the solid content; and/or having a content of the metal chelate compound (C), based on 100 parts by mass of the polyhydroxyurethane resin (A), of 1 to 50 parts by mass; and/or wherein the metal chelate compound (C) comprises at least one of a water-soluble titanium chelate compound and a water-soluble zirconium chelate compound; and/or
wherein the metal chelate compound (C) comprises at least one of titanium triethanolaminate and zirconium lactate ammonium salt.

## Patentansprüche

1. Gasbarrierefolie aus einem Verbundharz, wobei das Verbundharz Folgendes umfasst:
ein Polyhydroxyurethanharz (A), das eine Wiederholungseinheit der Formel (1.1) oder eine Struktureinheit der Formel (1.2) umfasst, wobei die Wiederholungseinheiten als Grundstruktur eine Struktureinheit aufweisen, die durch Polymerisation einer Verbindung (a1) mit mindestens zwei fünfgliedrigen cyclischen Carbonatstrukturen und einer Verbindung (a2) mit mindestens zwei Aminogruppen gebildet wird;
eine stärkebasierte Verbindung (B); und
eine Metallchelatverbindung (C), die das Polyhydroxyurethanharz (A) und die stärkebasierte Verbindung (B) vernetzt, und das
einen Gehalt der stärkebasierter Verbindung (B), bezogen auf 100 Massenteile des Polyhydroxyurethanharzes (A), von 10 bis 300 Massenteilen aufweist: 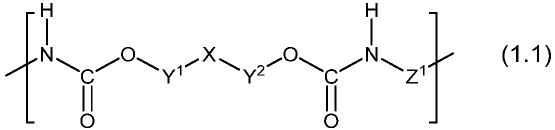
wobei
X für eine zweiwertige organische Gruppe, die von Verbindung (a1) abgeleitet ist, oder für eine direkte Bindung steht;
Y¹ und Y² jeweils unabhängig voneinander für eine zweiwertige organische Gruppe gemäß einer der folgenden Formeln (2) bis (5) stehen, wobei zwei oder mehr der zweiwertigen organischen Gruppen gemäß der folgenden Formeln (2) bis (5) gegebenenfalls in einem Molekül des Polyhydroxyurethanharzes (A) gemischt sein können; und
Z¹ für eine zweiwertige organische Gruppe gemäß der folgenden Formel (6.1) steht: 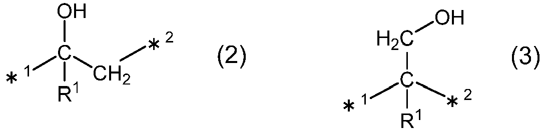 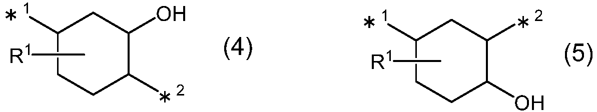
wobei
R¹ jeweils unabhängig voneinander für ein Wasserstoffatom oder eine Methylgruppe steht,
*¹ für eine chemische Bindung mit X in Formel (1.1) steht oder, wenn X eine direkte Bindung ist, *1 für eine chemische Bindung mit dem anderen Y und
*² für eine chemische Bindung mit O in Formel (1.1) steht, 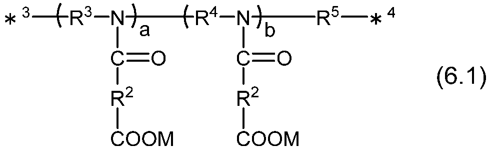
wobei
R² für eine zweiwertige Kohlenwasserstoffgruppe steht, die optional ein Sauerstoffatom und ein Stickstoffatom in ihrer Struktur enthält;
R³, R⁴ und R⁵ jeweils unabhängig voneinander für eine C₁₋₁₀-Alkylengruppe stehen, die gegebenenfalls eine Etherbindung in ihrer Struktur enthält;
jedes M jeweils unabhängig voneinander für
ein Wasserstoffatom oder ein Gegenion steht, das eine Salzstruktur bildet;
a steht für eine ganze Zahl von 0 bis 3 und
b steht für eine ganze Zahl von 1 bis 5;
*³ steht für eine chemische Bindung mit N in Z¹ in Formel (1.1) und
*⁴ steht für die andere chemische Bindung in Z¹; 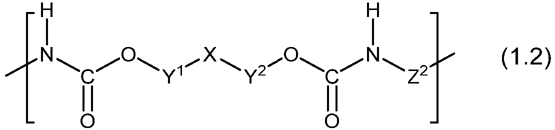
wobei
X für eine zweiwertige organische Gruppe steht, abgeleitet von der Verbindung (a1), oder für eine direkte Bindung;
Y¹ und Y² jeweils unabhängig voneinander für eine zweiwertige organische Gruppe, dargestellt durch eine der folgenden Formeln (2) bis (5), stehen, und zwei oder mehr der zweiwertigen organischen Gruppen, dargestellt durch die folgenden Formeln (2) bis (5), optional in einem Molekül des Polyhydroxyurethanharzes (A) gemischt sein können;
Z² für eine zweiwertige organische Gruppe der folgenden Formel (6.2) steht, deren Struktur von der Verbindung (a2) abgeleitet ist: 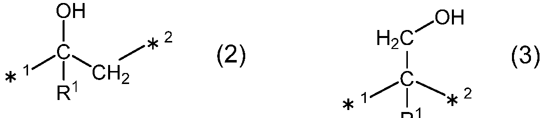 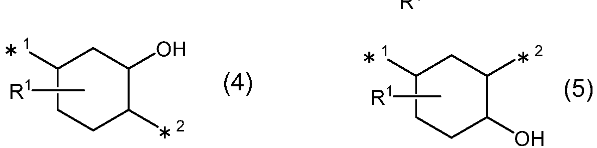
wobei
R¹ jeweils unabhängig voneinander für ein Wasserstoffatom oder eine Methylgruppe steht,
*¹ für eine chemische Bindung mit X in Formel (1.2) steht oder, wenn X eine direkte Bindung ist, *¹ eine chemische Bindung mit dem anderen Y steht und
*² für eine chemische Bindung mit O in Formel (1.2) steht, 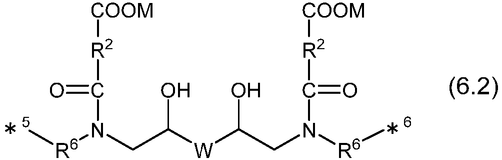
wobei
R² eine zweiwertige Kohlenwasserstoffgruppe darstellt, die optional ein Sauerstoffatom und ein Stickstoffatom in ihrer Struktur enthält;
R⁶ jeweils unabhängig voneinander für eine zweiwertige aliphatische C₁₋₁₅-Kohlenwasserstoffgruppe, eine alicyclische C₄₋₁₅-Kohlenwasserstoffgruppe oder eine aromatische C₆₋₁₅-Kohlenwasserstoffgruppe steht und in der Struktur jeder dieser Gruppen gegebenenfalls eine Etherbindung, eine Sulfonylbindung, eine Hydroxygruppe und ein Halogenatom enthalten sein können;
W für eine zweiwertige aliphatische C₁₋₃₀-Kohlenwasserstoffgruppe, eine alicyclische C₄₋₄₀-Kohlenwasserstoffgruppe oder eine aromatische C₆₋₄₀-Kohlenwasserstoffgruppe steht, wobei die Struktur jeder dieser Gruppen eine Etherbindung, eine Aminobindung, eine Sulfonylbindung, eine Esterbindung, eine Hydroxygruppe und ein Halogenatom enthalten kann, und wobei gegebenfalls eine Polyalkylenglykolkette mit einer C₂₋₆-Alkylengruppe und 1 bis 30 Wiederholungseinheiten enthaltens; und
jedes M unabhängig voneinander für ein Wasserstoffatom oder ein Gegenion, das eine Salzstruktur bildet, steht;
*⁵ für eine chemische Bindung mit N in Z² in Formel (1.2) steht und
*⁶ für die andere chemische Bindung in Z² steh.

2. Die Gasbarrierefolie gemäß Anspruch 1, wobei die Verbindung (a2) des Polyhydroxyurethanharzes (A), das eine Wiederholungseinheit der Formel (1.1) umfasst, eine Verbindung der Formel (a2-1) umfasst: 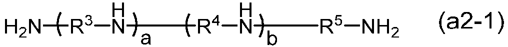 wobei R³, R⁴ und R⁵ jeweils unabhängig voneinander für eine C₁₋₁₀-Alkylengruppe stehen, die gegebenenfalls eine Etherbindung in ihrer Struktur enthält, a für eine ganze Zahl von 0 bis 3 und b für eine ganze Zahl von 1 bis 5 stehen.

3. Die Gasbarrierefolie gemäß Anspruch 1, wobei die Verbindung (a2) des Polyhydroxyurethanharzes (A), das eine Wiederholungseinheit der Formel (1.2) umfasst, eine Verbindung der Formel (a2-2) umfasst: 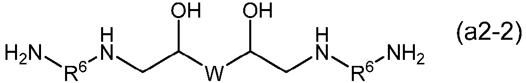 wobei R⁶ und W synonym zu R⁶ bzw. W in Formel (6.2) sind.

4. Die Gasbarrierefolie nach Anspruch 1 oder 3, wobei das Polyhydroxyurethanharz (A), das eine Wiederholungseinheit der Formel (1.2) umfasst, zusätzlich zu der Struktureinheit der Formel (1.2) eine Struktureinheit der folgenden Formel (1.3) enthält: 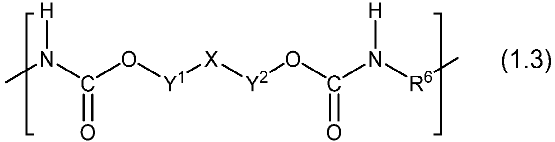 wobei X, Y¹ und Y² jeweils synonym zu X, Y¹ und Y² in Formel (1.2) und R⁶ synonym zu R⁶ in Formel (6.2) sind.

5. Die Gasbarrierefolie nach einem der Ansprüche 1 bis 4, wobei die stärkebasierte Verbindung (B) mindestens eines der folgenden umfasst: ein schwerverdauliches Glucan mit einer Hydroxylzahl im Bereich von 30 bis 1500 mgKOH/g, das durch Rekondensation von Zucker, einem Stärkeabbauprodukt mit einem DE von 70 bis 100, gewonnen wird, und ein verarbeitetes Produkt des schwerverdaulichen Glucans; und/oder wobei der Gehalt der Metallchelatverbindung (C), bezogen auf 100 Massenteile des Polyhydroxyurethanharzes (A), 1 bis 50 Massenteile beträgt; und/oder
wobei die Metallchelatverbindung (C) mindestens eine wasserlösliche Titanchelatverbindung und/oder eine wasserlösliche Zirkoniumchelatverbindung umfasst; und/oder
wobei die Metallchelatverbindung (C) mindestens eine der Verbindungen Titantriethanolamin und Zirkoniumlactat-Ammoniumsalz umfasst; und/oder mit einer Dicke im Bereich von 0,1 bis 100 µm und einer Sauerstoffdurchlässigkeit bei einer Temperatur von 23 °C und einer relativen Luftfeuchtigkeit von 65 % RH von 50 ml/m² × Tag × atm oder weniger.

6. Eine Verbundharzzusammensetzung zur Bildung einer Gasbarrierefolie, wobei
die Verbundharzzusammensetzung Folgendes umfasst:
ein Polyhydroxyurethanharz (A), das eine Wiederholungseinheit der Formel (1.1) oder der Formel (1.2) umfasst, wobei die Wiederholungseinheiten als Grundstruktur eine Struktureinheit aufweisen, die durch Polymerisation einer Verbindung (a1) mit mindestens zwei fünfgliedrigen cyclischen Carbonatstrukturen und einer Verbindung (a2) mit mindestens zwei Aminogruppen gebildet wird;
eine stärkebasierte Verbindung (B); und
eine Metallchelatverbindung (C), die das Polyhydroxyurethanharz (A) und die stärkebasierte Verbindung (B) vernetzen kann, und
einen Gehalt der stärkebasierten Verbindung (B), bezogen auf 100 Massenteile des Polyhydroxyurethanharzes (A), von 10 bis 300 Massenteilen aufweist: 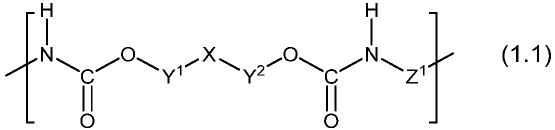
wobei
X für eine zweiwertige organische Gruppe steht, die von der Verbindung (a1) abgeleitet ist, oder eine direkte Bindung;
Y¹ und Y² jeweils unabhängig voneinander für eine zweiwertige organische Gruppe gemäß einer der folgenden Formeln (2) bis (5) stehen, wobei zwei oder mehr der zweiwertigen organischen Gruppen gemäß den folgenden Formeln (2) bis (5) gegebenenfalls in einem Molekül des Polyhydroxyurethanharzes (A) gemischt sein können; und
Z1 für eine zweiwertige organische Gruppe gemäß der folgenden Formel (6.1) stehen: 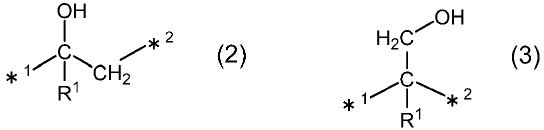 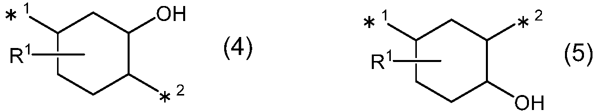
wobei
R1 jeweils unabhängig voneinander für ein Wasserstoffatom oder eine Methylgruppe steht,
*¹ für eine chemische Bindung mit X in Formel (1.1) steht oder, wenn X eine direkte Bindung ist, *1 eine chemische Bindung mit dem anderen Y und
*² eine chemische Bindung mit O in Formel (1.1) darstellt, 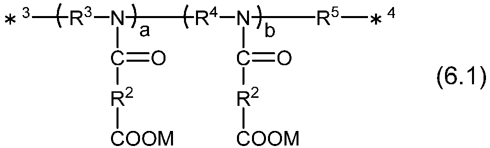
wobei
R² für eine zweiwertige Kohlenwasserstoffgruppe steht, die optional ein Sauerstoffatom und ein Stickstoffatom in ihrer Struktur enthält;
R³, R⁴ und R⁵ jeweils unabhängig voneinander für eine C₁₋₁₀-Alkylengruppe stehen, die gegebenenfalls eine Etherbindung in ihrer Struktur enthält;
jedes M jeweils unabhängig voneinander für ein Wasserstoffatom oder ein Gegenion steht, das eine Salzstruktur bildet;
a für eine ganze Zahl von 0 bis 3 steht und
b für eine ganze Zahl von 1 bis 5 steht;
*³ für eine chemische Bindung mit N in Z¹ in Formel (1.1) steht und
*⁴ für die andere chemische Bindung in Z1 steht; 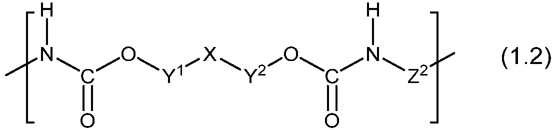
wobei
X für eine zweiwertige organische Gruppe, abgeleitet von der Verbindung (a1), oder eine direkte Bindung steht;
Y¹ und Y² jeweils unabhängig voneinander Für eine zweiwertige organische Gruppe, dargestellt durch eine der folgenden Formeln (2) bis (5), stehen, und zwei oder mehr der zweiwertigen organischen Gruppen, dargestellt durch die folgenden Formeln (2) bis (5), gegebenenfalls in einem Molekül des Polyhydroxyurethanharzes (A) gemischt sein können;
Z² für eine zweiwertige organische Gruppe der folgenden Formel (6.2) steht, deren Struktur von der Verbindung (a2) abgeleitet ist: 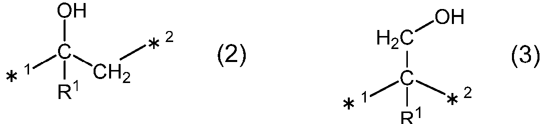 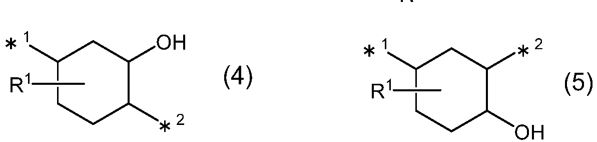
Wobei
R¹ jeweils unabhängig voneinander für ein Wasserstoffatom oder eine Methylgruppe steht,
*¹ für eine chemische Bindung mit X in Formel (1.2) oder, wenn X eine direkte Bindung ist, *¹ eine chemische Bindung mit dem anderen Y und *² eine chemische Bindung mit O in Formel (1.2) steht, 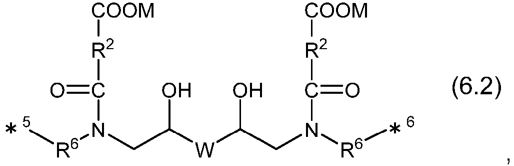
wobei
R² für eine zweiwertige Kohlenwasserstoffgruppe steht, die gegebenenfalls ein Sauerstoffatom und ein Stickstoffatom in ihrer Struktur enthält;
R⁶ jeweils unabhängig voneinander für eine zweiwertige aliphatische C₁₋₁₅-Kohlenwasserstoffgruppe, eine alicyclische C₄₋₁₅-Kohlenwasserstoffgruppe oder eine aromatische C₆₋₁₅-Kohlenwasserstoffgruppe steht und in der Struktur jeder dieser Gruppen gegebenenfalls eine Etherbindung, eine Sulfonylbindung, eine Hydroxygruppe und ein Halogenatom enthalten sein können;
W für eine zweiwertige aliphatische C₁₋₃₀-Kohlenwasserstoffgruppe, eine alicyclische C₄₋₄₀-Kohlenwasserstoffgruppe oder eine aromatische C₆₋₄₀-Kohlenwasserstoffgruppe steht, und in einer Struktur jeder dieser Gruppen gegebenenfalls eine Etherbindung, eine Aminobindung, eine Sulfonylbindung, eine Esterbindung, eine Hydroxygruppe und ein Halogenatom vorliegen sowie eine Polyalkylenglykolkette mit einer C₂₋₆-Alkylengruppe und 1 bis 30 Wiederholungseinheiten enthalten sind;
jedes M unabhängig voneinander für ein Wasserstoffatom oder ein Gegenion steht, das eine Salzstruktur bildet, und
*⁵ für eine chemische Bindung mit N in Z² in der Formel (1.2) steht und
*⁶ für die andere chemische Bindung in Z² steht.

7. Die Kompositharzzusammensetzung gemäß Anspruch 6, wobei die Verbindung (a2) des Polyhydroxyurethanharzes (A), das eine Wiederholungseinheit der Formel (1.1) enthält, eine Verbindung der Formel (a2-1) ist: 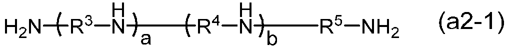 wobei R³, R⁴ und R⁵ jeweils unabhängig voneinander für eine C₁₋₁₀-Alkylengruppe stehen, die optional eine Etherbindung enthält, a eine ganze Zahl von 0 bis 3 und b eine ganze Zahl von 1 bis 5 ist.

8. Die Kompositharzzusammensetzung gemäß Anspruch 6, wobei die Verbindung (a2) des Polyhydroxyurethanharzes (A), das eine Wiederholungseinheit der Formel (1.2) enthält, eine Verbindung der Formel (a2-2) ist: 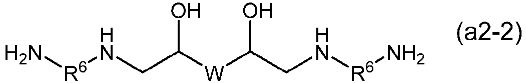 wobei R⁶ und W synonym zu R⁶ bzw. W in Formel (6.2) sind.

9. Die Verbundharzzusammensetzung nach Anspruch 6 oder 8, wobei das Polyhydroxyurethanharz (A), das eine Wiederholungseinheit der Formel (1.2) umfasst, zusätzlich zu der Struktureinheit der Formel (1.2) eine Struktureinheit der folgenden Formel (1.3) enthält: 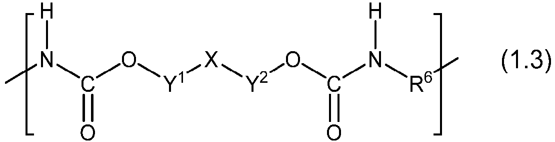 wobei X, Y¹ und Y² synonym mit X, Y¹ bzw. Y² in Formel (1.2) und R⁶ synonym mit R⁶ in Formel (6.2) sind.

10. Die Kompositharzzusammensetzung nach einem der Ansprüche 6 bis 9, wobei die stärkebasierte Verbindung (B) mindestens eines von einem schwer verdaulichen Glucan mit einer Hydroxylzahl im Bereich von 30 bis 1500 mgKOH/g, bestimmt gemäß JIS K1557-1, wobei das schwer verdauliche Glucan durch erneute Kondensation von Zucker, einem Stärkeabbauprodukt mit einem DE von 70 bis 100, erhalten wird, und einem verarbeiteten Produkt des schwer verdaulichen Glucans umfasst, wobei "DE (Dextroseäquivalent)" ein Index für den Abbaugrad eines Stärkeabbauprodukts und ein Wert für die Menge an reduzierendem Zucker in einer Probe ist, wobei der Wert als Glucosemenge in Prozent basierend auf dem Feststoffgehalt ausgedrückt wird; und/oder
mit einem Gehalt der Metallchelatverbindung (C), bezogen auf 100 Massenteile des Polyhydroxyurethanharzes (A), von 1 bis 50 Massenteilen; und/oder
wobei die Metallchelatverbindung (C) mindestens eine wasserlösliche Titanchelatverbindung und/oder eine wasserlösliche Zirkoniumchelatverbindung umfasst; und/oder
wobei die Metallchelatverbindung (C) mindestens eine der Verbindungen Titantriethanolaminat und Zirkoniumlactat-Ammoniumsalz umfasst.

## Revendications

1. Film barrière aux gaz fait d'une résine composite, dans lequel
la résine composite comprend :
une résine de polyhydroxyuréthane (A) comprenant un motif répétitif représenté par la formule (1.1) suivante ou comprenant un motif de structure représenté par la formule (1.2) suivante, les motifs répétitifs ayant, comme structure de base, un motif de structure formé par la polymérisation d'un composé (a1) ayant au moins deux structures de carbonate cyclique à cinq chaînons et d'un composé (a2) ayant au moins deux groupes amino ;
un composé à base d'amidon (B) ; et
un composé chélatant métallique (C) réticulant la résine de polyhydroxyuréthane (A) et le composé à base d'amidon (B), et
présente une teneur en composé à base d'amidon (B), sur la base de 100 parties en masse de la résine de polyhydroxyuréthane (A), de 10 à 300 parties en masse : 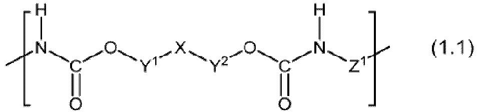
dans laquelle X représente un groupe organique divalent dérivé du composé (a1) ou d'une liaison directe ; Y¹ et Y² représentent chacun indépendamment un groupe organique divalent représenté par l'une quelconque des formules (2) à (5) suivantes, et deux ou plus des groupes organiques divalents représentés par les formules (2) à (5) suivantes sont facultativement mélangés dans une molécule de la résine de polyhydroxyuréthane (A) ; et Z¹ représente un groupe organique divalent représenté par la formule (6.1) suivante : 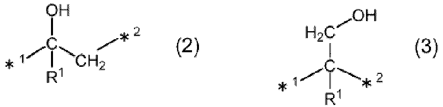 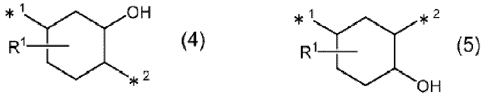
dans laquelle chaque R¹ représente indépendamment un atome d'hydrogène ou un groupe méthyle, *¹ représente une liaison chimique avec X dans la formule (1.1), ou lorsque X est une liaison directe, *¹ représente une liaison chimique avec l'autre Y, et *² représente une liaison chimique avec O dans la formule (1.1), 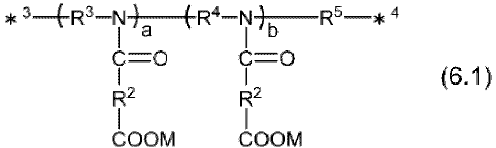
dans laquelle R² représente un groupe hydrocarboné divalent comprenant facultativement un atome d'oxygène et un atome d'azote dans une structure de celui-ci ; R³, R⁴ et R⁵ représentent chacun indépendamment un groupe alkylène en C1-10 comprenant facultativement une liaison éther dans une structure de celui-ci ; chaque M représente indépendamment un atome d'hydrogène ou un contre-ion qui forme une structure de sel ; a représente un nombre entier de 0 à 3, et b représente un nombre entier de 1 à 5 ; et *³ représente une liaison chimique avec N dans Z¹ dans la formule (1.1), et *⁴ représente l'autre liaison chimique dans Z¹ ; 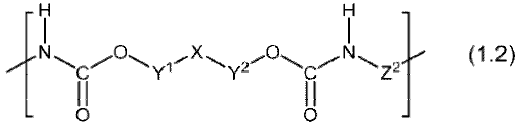
dans laquelle X représente un groupe organique divalent dérivé du composé (a1) ou une liaison directe ; Y¹ et Y² représentent chacun indépendamment un groupe organique divalent représenté par l'une quelconque des formules (2) à (5) suivantes, et deux ou plus des groupes organiques divalents représentés par les formules (2) à (5) suivantes sont facultativement mélangés dans une molécule de la résine de polyhydroxyuréthane (A) ; et Z² représente un groupe organique divalent représenté par la formule (6.2) suivante comprenant une structure dérivée du composé (a2) : 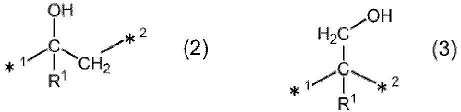 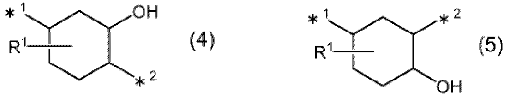
dans laquelle chaque R¹ représente indépendamment un atome d'hydrogène ou un groupe méthyle, *¹ représente une liaison chimique avec X dans la formule (1.2), ou lorsque X est une liaison directe, *¹ représente une liaison chimique avec l'autre Y, et *² représente une liaison chimique avec O dans la formule (1.2), 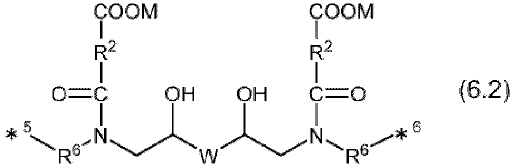
dans laquelle R² représente un groupe hydrocarboné divalent comprenant facultativement un atome d'oxygène et un atome d'azote dans une structure de celui-ci ; chaque R⁶ représente indépendamment un groupe hydrocarboné aliphatique divalent en C1-15, un groupe hydrocarboné alicyclique en C4-15 ou un groupe hydrocarboné aromatique en C6-15, et dans une structure de chacun de ces groupes, une liaison éther, une liaison sulfonyle, un groupe hydroxy, et un atome d'halogène sont facultativement contenus ; W représente un groupe hydrocarboné aliphatique divalent en C1-30, un groupe hydrocarboné alicyclique en C4-40 ou un groupe hydrocarboné aromatique en C6-40, et dans une structure de chacun de ces groupes, une liaison éther, une liaison amino, une liaison sulfonyle, une liaison ester, un groupe hydroxy, et un atome d'halogène, et une chaîne de polyalkylèneglycol ayant un groupe alkylène en C2-6 et 1 à 30 motifs répétitifs sont facultativement contenus ; chaque M représente indépendamment un atome d'hydrogène ou un contre-ion qui forme une structure de sel ; et *⁵ représente une liaison chimique avec N dans Z² dans la formule (1.2), et *⁶ représente l'autre liaison chimique dans Z².

2. Film barrière aux gaz selon la revendication 1, dans lequel le composé (a2) de la résine de polyhydroxyuréthane (A) comprenant un motif répétitif représenté par la formule (1.1) comprend un composé représenté par la formule (a2-1) suivante : 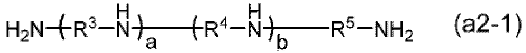 dans laquelle R³, R⁴ et R⁵ représentent chacun indépendamment un groupe alkylène en C1-10 comprenant facultativement une liaison éther dans une structure de celui-ci, a représente un nombre entier de 0 à 3, et b représente un nombre entier de 1 à 5.

3. Film barrière aux gaz selon la revendication 1, dans lequel le composé (a2) de la résine de polyhydroxyuréthane (A) comprenant un motif répétitif représenté par la formule (1.2) comprend un composé représenté par la formule (a2-2) suivante : 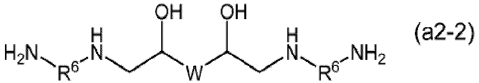 dans laquelle R⁶ et W sont synonymes de R⁶ et W dans la formule (6.2), respectivement.

4. Film barrière aux gaz selon la revendication 1 ou 3, dans lequel la résine de polyhydroxyuréthane (A) comprenant un motif répétitif représenté par la formule (1.2) comprend en outre un motif de structure représenté par la formule (1.3) suivante conjointement avec le motif de structure représenté par la formule (1.2) : 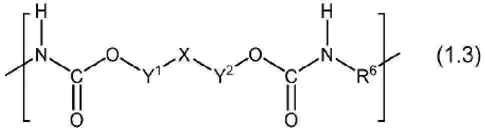 dans laquelle X, Y¹ et Y² sont synonymes de X, Y¹ et Y² dans la formule (1.2), respectivement, et R⁶ est synonyme de R⁶ dans la formule (6.2).

5. Film barrière aux gaz selon l'une quelconque des revendications 1 à 4, dans lequel le composé à base d'amidon (B) comprend au moins l'un parmi un glucane difficilement digestible présentant un indice d'hydroxyle dans une plage de 30 à 1500 mg de KOH/g, le glucane difficilement digestible étant obtenu en soumettant un sucre qui est un produit de décomposition d'amidon et présentant un DE de 70 à 100 à une recondensation, et un produit transformé du glucane difficilement digestible ; et/ou
dans lequel une teneur en composé chélatant métallique (C), sur la base de 100 parties en masse de la résine de polyhydroxyuréthane (A), est de 1 à 50 parties en masse ;
et/ou dans lequel le composé chélatant métallique (C) comprend au moins l'un parmi un composé chélatant au titane hydrosoluble et un composé chélatant au zirconium hydrosoluble ; et/ou
dans lequel le composé chélatant métallique (C) comprend au moins l'un parmi le triéthanolaminate de titane et le sel d'ammonium de lactate de zirconium ; et/ou
présentant une épaisseur dans une plage de 0,1 à 100 µm et une perméabilité à l'oxygène à une température de 23 °C et une humidité relative de 65 % de 50 ml/m²·jour·atm ou moins.

6. Composition de résine composite pour former un film barrière aux gaz, dans laquelle la composition de résine composite comprend :
une résine de polyhydroxyuréthane (A) comprenant un motif répétitif représenté par la formule (1.1) suivante ou comprenant un motif répétitif représenté par la formule (1.2) suivante, les motifs répétitifs ayant, comme structure de base, un motif de structure formé par la polymérisation d'un composé (a1) ayant au moins deux structures de carbonate cyclique à cinq chaînons et d'un composé (a2) ayant au moins deux groupes amino ;
un composé à base d'amidon (B) ; et
un composé chélatant métallique (C) capable de réticuler la résine de polyhydroxyuréthane (A) et le composé à base d'amidon (B), et présente une teneur en composé à base d'amidon (B), sur la base de 100 parties en masse de la résine de polyhydroxyuréthane (A), de 10 à 300 parties en masse : 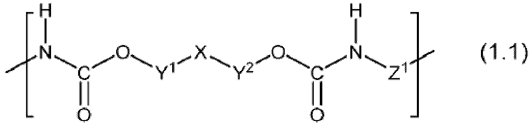
dans laquelle X représente un groupe organique divalent dérivé du composé (a1) ou d'une liaison directe ; Y¹ et Y² représentent chacun indépendamment un groupe organique divalent représenté par l'une quelconque des formules (2) à (5) suivantes, et deux ou plus des groupes organiques divalents représentés par les formules (2) à (5) suivantes sont facultativement mélangés dans une molécule de la résine de polyhydroxyuréthane (A) ; et Z¹ représente un groupe organique divalent représenté par la formule (6.1) suivante : 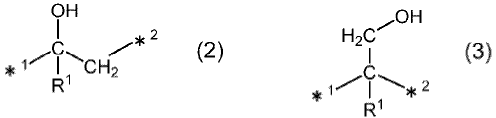 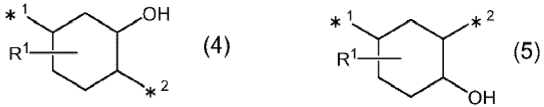
dans laquelle chaque R¹ représente indépendamment un atome d'hydrogène ou un groupe méthyle, *¹ représente une liaison chimique avec X dans la formule (1.1), ou lorsque X est une liaison directe, *¹ représente une liaison chimique avec l'autre Y, et *² représente une liaison chimique avec O dans la formule (1.1), 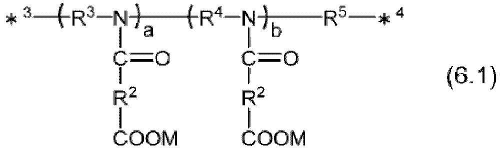
dans laquelle R² représente un groupe hydrocarboné divalent comprenant facultativement un atome d'oxygène et un atome d'azote dans une structure de celui-ci ; R³, R⁴ et R⁵ représentent chacun indépendamment un groupe alkylène en C1-10 comprenant facultativement une liaison éther dans une structure de celui-ci ; chaque M représente indépendamment un atome d'hydrogène ou un contre-ion qui forme une structure de sel ; a représente un nombre entier de 0 à 3, et b représente un nombre entier de 1 à 5 ; et *³ représente une liaison chimique avec N dans Z¹ dans la formule (1.1), et *⁴ représente l'autre liaison chimique dans Z¹ ; 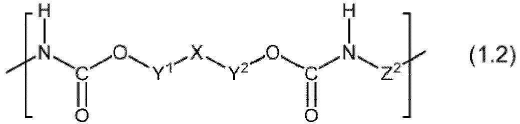
dans laquelle X représente un groupe organique divalent dérivé du composé (a1) ou une liaison directe ; Y¹ et Y² représentent chacun indépendamment un groupe organique divalent représenté par l'une quelconque des formules (2) à (5) suivantes, et deux ou plus des groupes organiques divalents représentés par les formules (2) à (5) suivantes sont facultativement mélangés dans une molécule de la résine de polyhydroxyuréthane (A) ; et Z² représente un groupe organique divalent représenté par la formule (6.2) suivante comprenant une structure dérivée du composé (a2) : 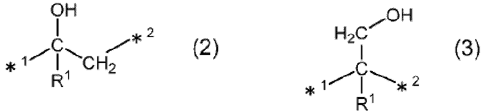 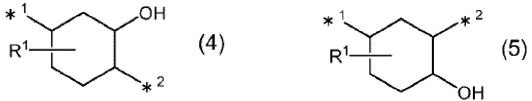
dans laquelle chaque R¹ représente indépendamment un atome d'hydrogène ou un groupe méthyle, *¹ représente une liaison chimique avec X dans la formule (1.2), ou lorsque X est une liaison directe, *¹ représente une liaison chimique avec l'autre Y, et *² représente une liaison chimique avec ○ dans la formule (1.2), 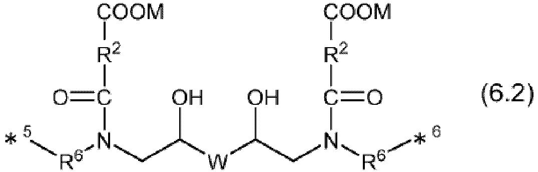
dans laquelle R² représente un groupe hydrocarboné divalent comprenant facultativement un atome d'oxygène et un atome d'azote dans une structure de celui-ci ; chaque R⁶ représente indépendamment un groupe hydrocarboné aliphatique divalent en C1-15, un groupe hydrocarboné alicyclique en C4-15 ou un groupe hydrocarboné aromatique en C6-15, et dans une structure de chacun de ces groupes, une liaison éther, une liaison sulfonyle, un groupe hydroxy, et un atome d'halogène sont facultativement contenus ; W représente un groupe hydrocarboné aliphatique divalent en C1-30, un groupe hydrocarboné alicyclique en C4-40 ou un groupe hydrocarboné aromatique en C6-40, et dans une structure de chacun de ces groupes, une liaison éther, une liaison amino, une liaison sulfonyle, une liaison ester, un groupe hydroxy, et un atome d'halogène, et une chaîne de polyalkylèneglycol ayant un groupe alkylène en C2-6 et 1 à 30 motifs répétitifs sont facultativement contenus ; chaque M représente indépendamment un atome d'hydrogène ou un contre-ion qui forme une structure de sel ; et *⁵ représente une liaison chimique avec N dans Z² dans la formule (1.2), et *⁶ représente l'autre liaison chimique dans Z².

7. Composition de résine composite selon la revendication 6, dans laquelle le composé (a2) de la résine de polyhydroxyuréthane (A) comprenant un motif répétitif représenté par la formule (1.1) comprend un composé représenté par la formule (a2-1) suivante : 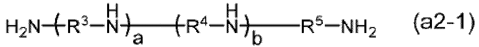 dans laquelle R³, R⁴ et R⁵ représentent chacun indépendamment un groupe alkylène en C1-10 comprenant facultativement une liaison éther dans une structure de celui-ci, a représente un nombre entier de 0 à 3, et b représente un nombre entier de 1 à 5.

8. Composition de résine composite selon la revendication 6, dans laquelle le composé (a2) de la résine de polyhydroxyuréthane (A) comprenant un motif répétitif représenté par la formule (1.2) comprend un composé représenté par la formule (a2-2) suivante : 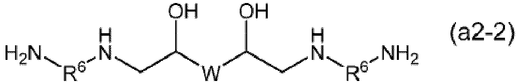 dans laquelle R⁶ et W sont synonymes de R⁶ et W dans la formule (6.2), respectivement.

9. Composition de résine composite selon la revendication 6 ou 8, dans laquelle la résine de polyhydroxyuréthane (A) comprenant un motif répétitif représenté par la formule (1.2) comprend en outre un motif de structure représenté par la formule (1.3) suivante conjointement avec le motif de structure représenté par la formule (1.2) : 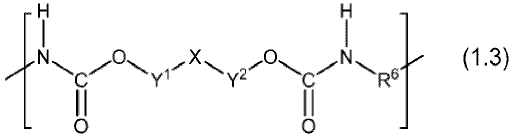 dans laquelle X, Y¹ et Y² sont synonymes de X, Y¹ et Y² dans la formule (1.2), respectivement, et R⁶ est synonyme de R⁶ dans la formule (6.2).

10. Composition de résine composite selon l'une quelconque des revendications 6 à 9, dans laquelle le composé à base d'amidon (B) comprend au moins l'un parmi un glucane difficilement digestible présentant un indice d'hydroxyle dans une plage de 30 à 1 500 mg de KOH/g telle que déterminé conformément au JIS K1557-1, le glucane difficilement digestible étant obtenu en soumettant un sucre qui est un produit de décomposition d'amidon et présentant un DE de 70 à 100 à une recondensation, et un produit transformé du glucane difficilement digestible, dans laquelle « DE (Équivalent Dextrose) » est un indice du degré de décomposition d'un produit de décomposition d'amidon et est une valeur de la quantité de sucre réducteur dans un échantillon, la valeur étant exprimée en quantité de glucose en pourcentage par rapport à la teneur en matières solides ; et/ou présentant une teneur en composé chélatant métallique (C), sur la base de 100 parties en masse de la résine de polyhydroxyuréthane (A), de 1 à 50 parties en masse ; et/ou dans laquelle le composé chélatant métallique (C) comprend au moins l'un parmi un composé chélatant au titane hydrosoluble et un composé chélatant au zirconium hydrosoluble ; et/ou
dans laquelle le composé chélatant métallique (C) comprend au moins l'un parmi le triéthanolaminate de titane et le sel d'ammonium de lactate de zirconium.
